# FASCICULE DE BREVET EUROPEEN

(11) **EP 4 018 313 B1**
(45) Date de publication et mention de la délivrance du brevet: **27.09.2023**
(21) Numéro de dépôt: 20772356.0
(22) Date de dépôt: 12.08.2020
(51) Int. Cl.: G06F 12/02, G06F 12/06

(54) **RÉCUPERATEUR DE DONNÉES DANS UN DISPOSITIF ÉLECTRONIQUE**
DATENSAMMLER IN EINER ELEKTRONISCHEN VORRICHTUNG
DATA COLLECTOR IN AN ELECTRONIC DEVICE

(30) Priorité: 21.08.2019 FR 1909319
(43) Date de publication de la demande: 29.06.2022
(73) Titulaire: Idemia Identity & Security France, 92400 Courbevoie (FR)
(72) Inventeur: DEL GIUDICE, Lauren Marjorie, 92400 Courbevoie (FR); DUCLOS, Rémi Louis Marie, 92400 Courbevoie (FR); BIEULES, Pierrick, 92400 Courbevoie (FR)
(74) Mandataire: Idemia
(86) Numéro de dépôt international: PCT/FR2020/051460
(87) Numéro de publication internationale: WO 2021/032919

(56) Documents cités:
- WO-A1-2010/130873
- CN-A- 107 908 470
- US-A1- 2011 087 713
- US-B2- 7 937 419

## Description

### Domaine Technique

L'invention se rapporte au domaine de la gestion de la mémoire dans des dispositifs électroniques et vise plus particulièrement à collecter des objets dans une mémoire volatile ou dans une mémoire non volatile d'un dispositif électronique pour libérer de l'espace mémoire.

Il est connu d'exécuter des applications compilées dans un code interprétable orienté objet dans des dispositifs électroniques. Des objets issus d'un langage objet peuvent ainsi être stockés de façon persistante dans une mémoire non volatile et, si besoin, être transférés dans une mémoire volatile lors de l'exécution d'une application associée.

Des applications interprétées en langage objet peuvent par exemple être exécutées dans une architecture comportant un élément sécurisé (ES) qui est intégré ou embarqué dans un dispositif électronique hôte, tel qu'un SOC (pour « System on Chip »). Pour ce faire, l'élément sécurisé comporte généralement une mémoire volatile interne apte à charger le code exécutable et les données d'une application interprétée en langage objet. Un tel élément sécurisé peut être, par exemple, un modem ou une carte mère, ou plus généralement, une unité de traitement indépendante configurée pour coopérer de façon sécurisée avec un dispositif électronique hôte, dans lequel est intégré ou embarqué l'élément sécurisé.

La mémoire volatile de l'élément sécurisé est généralement de taille relativement réduite, ce qui limite la taille et le nombre des applications que l'on peut charger et exécuter dans l'élément sécurisé.

Le dispositif électronique hôte peut également comporter une mémoire non volatile (MNV), tel qu'une mémoire non volatile réinscriptible par exemple. Cette mémoire non volatile permet de conserver en mémoire des applications susceptibles d'être invoquées si besoin par l'élément sécurisé, c'est-à-dire le code exécutable et les données de ces applications.

L'élément sécurisé doit alors accéder à certaines données présentes dans la mémoire non volatile du dispositif hôte afin que ces données puissent être récupérées et chargées dans la mémoire volatile de l'élément sécurisé. L'accès à de telles données dans la mémoire non volatile du dispositif hôte est toutefois coûteux en temps et en ressources, ce qui limite les performances générales du système, en particulier lorsque de nombreux accès en lecture ou écriture sont nécessaires dans la mémoire non volatile du dispositif hôte.

De manière générale, l'espace mémoire disponible dans de telles architectures est limité, ce qui peut poser problème notamment lorsqu'un volume important d'objets doit être chargé dans une mémoire non volatile pour exécuter une application interprétée objet.

Il existe déjà aujourd'hui des mécanismes pour collecter automatiquement dans la mémoire d'un dispositif électronique des objets issus d'un langage orienté objet en vue de libérer de l'espace mémoire. Les systèmes de collecte - appelés couramment récupérateur de mémoire (ou « garbage collecter » en anglais) - n'offrent cependant pas aujourd'hui des performances toujours satisfaisantes, notamment dans des architectures stockant des données en langage objet dans des mémoires volatiles et non volatiles. En particulier, il est généralement nécessaire d'analyser tous les objets présents dans la mémoire non volatile d'un système pour mettre en oeuvre un mécanisme de collecte visant à libérer de l'espace mémoire. Ce type d'analyse n'est pas toujours réalisé de façon optimale. En outre, les accès en lecture dans les mémoires non volatiles sont coûteux en temps et en ressource. Il est donc souhaitable de limiter de tels accès lors d'un processus de collecte.

Il existe aujourd'hui un besoin pour une solution permettant un processus de collecte efficace dans une architecture comprenant au moins une mémoire volatile et une mémoire non volatile, stockant des objets issus d'un langage orienté objet, de façon à libérer rapidement et avec un coût limité de l'espace mémoire dans de telles mémoires. Lors d'un tel processus de collecte, il est notamment souhaitable de conserver en mémoire autant que possible des objets pertinents susceptibles d'être invoqués par la suite par le système.

De manière générale, il est souhaitable d'améliorer l'utilisation de l'espace mémoire dans une architecture comportant une mémoire volatile et une mémoire non volatile, en libérant de l'espace mémoire par un processus de collecte de données se présentant sous la forme d'objets dans un langage orienté objet.

### Objet et résumé de l'invention

A cet effet, la présente invention concerne un procédé de collecte, mis en oeuvre par un premier dispositif électronique comportant une première mémoire de type volatile, ledit premier dispositif électronique coopérant avec un deuxième dispositif électronique comportant une deuxième mémoire de type non volatile, les première et deuxième mémoires, comprenant des objets constituant chacun une instance d'une classe d'un langage orienté objet, chaque objet étant susceptible de comprendre au moins une référence pointant vers un autre objet,
le procédé comprenant :
- détection d'au moins un objet dans la première mémoire et d'au moins un objet dans la deuxième mémoire constituant des racines de persistance ;
- analyse d'au moins une partie des objets compris dans les première et deuxième mémoires en parcourant, depuis les racines de persistance, une arborescence d'objets déterminée dynamiquement à partir de chaque référence, comprise dans les objets analysés, qui pointe vers un autre objet,
   dans lequel ladite analyse comprend, de manière itérative pour chaque objet analysé dans l'arborescence d'objets :
   ∘ si l'objet analysé est dans la deuxième mémoire et n'a pas de copie dans la première mémoire, allocation dans la première mémoire d'un objet, dit objet clone, représentant une copie dudit objet analysé ainsi que d'un objet, dit objet de localisation, comprenant une première référence pointant vers l'objet clone dans la première mémoire et une deuxième référence pointant vers l'objet analysé dans la deuxième mémoire ;
   ∘ identification de chaque référence, comprise dans ledit objet analysé, pointant dans l'arborescence d'objets vers un autre objet, dit objet référencé ; et
   ∘ définition, pour chaque référence identifiée, d'un type de ladite référence parmi un premier type, dit référence forte, et un deuxième type, dit référence faible, conformément à des critères prédéfinis ; ladite analyse se poursuivant le long de l'arborescence d'objets uniquement pour chaque objet référencé vers lequel pointe une référence forte depuis l'objet analysé ; et
- sur détection que ladite analyse est achevée, collecte dans les première et deuxième mémoires pour supprimer chaque objet qui n'a pas été analysé lors de ladite analyse.

L'invention permet avantageusement de mettre en oeuvre un récupérateur de mémoire (garbage collecter) efficace dans une architecture comprenant une mémoire volatile et une mémoire non volatile, stockant des objets issus d'un langage orienté objet, de façon à libérer rapidement et avec un coût limité de l'espace mémoire dans ces mémoires. Lors de ce processus de collecte, on conserve en mémoire autant que possible des objets pertinents susceptibles d'être invoqués par la suite par le premier dispositif, à partir de critères qui sont prédéfinis en ce sens.

Le récupérateur de mémoire de l'invention permet de sélectionner et supprimer les objets inatteignables contenus aussi bien dans une mémoire volatile que dans une mémoire non volatile du système, afin de libérer un maximum d'espace mémoire.

Selon un mode de réalisation particulier, lors de ladite analyse, chaque référence d'un objet analysé est définie en tant que référence faible si au moins l'une des conditions suivantes est satisfaite :
a) ladite référence pointe vers un quelconque objet qui a été alloué dans la première mémoire au cours de ladite analyse ; et
b) ladite référence est une référence d'un objet de localisation compris dans la première mémoire, ladite référence pointant vers un objet associé compris dans la deuxième mémoire.

Selon un mode de réalisation particulier, lors de ladite analyse, chaque référence d'un objet analysé est définie en tant que référence forte si ladite référence pointe vers un objet qui a été alloué dans la première mémoire antérieurement à ladite analyse et si ladite référence ne pointe pas depuis la première vers la deuxième mémoire.

Selon un mode de réalisation particulier, ledit procédé est déclenché sur détection d'un évènement prédéfini comprenant au moins l'un parmi :
- réception d'une commande émise par un système d'exploitation du premier dispositif électronique ou par une application exécutée par ledit premier dispositif électronique ; et
- détection que la première mémoire ou la deuxième mémoire est saturée ou à atteint un seuil d'occupation prédéfini.

Selon un mode de réalisation particulier, le procédé comprend en outre :
- allocation, dans la première mémoire, d'un objet de marquage comprenant des informations de marquage associées à chaque objet déjà présent dans les première et deuxième mémoires à l'initiation de ladite analyse ; et
- mise à jour au cours de ladite analyse de sorte que lesdites informations de marquage indiquent pour chaque objet associé si ledit objet i) a déjà été analysé lors de ladite analyse, ii) n'a pas encore été analysé mais pour lequel une référence pointant vers ledit objet a déjà été identifiée, ou iii) n'a pas encore été analysé et pour lequel aucune référence pointant vers ledit objet n'a encore été identifiée ;
ladite collecte étant réalisée en sélectionnant les objets à supprimer en fonction desdites informations de marquage.

Selon un mode de réalisation particulier, ledit objet de marquage est collecté dans la première mémoire lors de ladite collecte.

Selon un mode de réalisation particulier, l'objet de marquage est enregistré dans un conteneur mémoire avec chaque autre objet, de l'arborescence d'objets, contenu dans la première mémoire.

Selon un mode de réalisation particulier, chaque objet de l'arborescence d'objets compris dans la première mémoire volatile est l'un parmi :
- un objet transitoire, instancié par une quelconque application ;
- un objet clone représentant une copie d'un objet présent dans la deuxième mémoire ;
- un objet de localisation alloué dans la première mémoire en association avec un objet clone de la première mémoire et un objet correspondant dans la deuxième mémoire ; et
- ledit objet de marquage

Selon un mode de réalisation particulier, lors de ladite collecte, le premier dispositif électronique supprime par ordre de priorité décroissante :
- au moins un premier objet dans la première mémoire qui n'a pas été analysé lors de ladite analyse et pour lequel aucune référence n'a été identifiée comme pointant vers ledit au moins un premier objet ; puis
- au moins un deuxième objet dans la deuxième mémoire qui n'a pas été analysé lors de ladite analyse et pour lequel aucune référence n'a été identifiée comme pointant vers ledit au moins un deuxième objet.

Selon un mode de réalisation particulier, le premier dispositif électronique détecte que l'analyse est achevée lorsqu'il a analysé tous les objets de l'arborescence d'objets vers lesquels pointe au moins une référence forte.

Selon un mode de réalisation particulier, ladite collecte comprend :
- suppression dans la première mémoire de chaque objet clone représentant la copie d'un quelconque objet supprimé dans la deuxième mémoire lors de ladite collecte.

Selon un mode de réalisation particulier, ladite collecte comprend :
- suppression dans la première mémoire de chaque objet de localisation qui est associé à un quelconque objet clone supprimé dans la première mémoire lors de ladite collecte.

Selon un mode de réalisation particulier, le procédé comprend en outre, sur détection d'un évènement prédéfini avant achèvement de ladite analyse, une collecte anticipée au cours de laquelle le premier dispositif électronique supprime en priorité au moins un objet, dit objet collecté, qui satisfait les conditions suivantes :
- l'objet collecté a déjà été analysé au cours de ladite analyse ;
- l'objet collecté n'est pas associé à une application en cours d'exécution ; et
- l'objet collecté est un objet clone ou de localisation.

En conséquence, l'invention vise aussi un programme d'ordinateur sur un support d'informations, ce programme étant susceptible d'être mis en oeuvre dans un dispositif électronique tel qu'une carte à puce ou un ordinateur, ce programme comportant des instructions adaptées à la mise en oeuvre des étapes d'un procédé de collecte tel que défini dans ce document.

L'invention vise aussi un support d'enregistrement (ou support d'informations) lisible par un ordinateur, et comportant des instructions d'un programme d'ordinateur tel que mentionné ci-dessus.

A noter que les programmes d'ordinateur mentionnés dans le présent document peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

De plus, les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

L'invention vise également un premier dispositif électronique tel que défini ci-avant.

En particulier, l'invention vise un dispositif électronique, dit premier dispositif électronique, comportant une première mémoire de type volatile, ledit premier dispositif électronique étant configuré pour coopérer avec un deuxième dispositif électronique comportant une deuxième mémoire de type non volatile,

les première et deuxième mémoires comprenant des objets constituant chacun une instance d'une classe d'un langage orienté objet, chaque objet étant susceptible de comprendre au moins une référence pointant vers un autre objet, le premier dispositif électronique comprenant :
- un module de détection pour détecter au moins un objet dans la première mémoire et au moins un objet dans la deuxième mémoire constituant des racines de persistance ;
- un module d'analyse configuré pour réaliser une analyse d'au moins une partie des objets compris dans les première et deuxième mémoires en parcourant, depuis les racines de persistance, une arborescence d'objets déterminée dynamiquement à partir de chaque référence, comprise dans les objets analysés, qui pointe vers un autre objet ;
   dans lequel ladite analyse comprend, de manière itérative pour chaque objet analysé dans l'arborescence d'objets :
   ∘ si l'objet analysé est dans la deuxième mémoire et n'a pas de copie dans la première mémoire, allocation dans la première mémoire d'un objet, dit objet clone, représentant une copie dudit objet analysé ainsi que d'un objet, dit objet de localisation, comprenant une première référence pointant vers l'objet clone dans la première mémoire et une deuxième référence pointant vers l'objet analysé dans la deuxième mémoire ;
   ∘ identification de chaque référence, comprise dans ledit objet analysé, pointant dans l'arborescence d'objets vers un autre objet, dit objet référencé ; et
   ∘ définition, pour chaque référence identifiée, d'un type de ladite référence parmi un premier type, dit référence forte, et un deuxième type, dit référence faible, conformément à des critères prédéfinis ;
      ladite analyse se poursuivant le long de l'arborescence d'objets uniquement pour chaque objet référencé vers lequel pointe une référence forte depuis l'objet analysé ; et
- un module de collecte configuré, sur détection que ladite analyse est achevée, pour supprimer dans les première et deuxième mémoires chaque objet qui n'a pas été analysé par le module d'analyse lors de ladite analyse.

Selon un mode de réalisation, l'invention est mise en oeuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. De la même manière, un composant matériel correspond à tout élément d'un ensemble matériel (ou hardware) apte à mettre en oeuvre une fonction ou un ensemble de fonctions, selon ce qui est décrit ci-dessous pour le module concerné.

A noter que les différents modes de réalisation mentionnés ci-avant en relation avec le procédé de collecte de l'invention ainsi que les avantages associés s'appliquent de façon analogue au premier dispositif électronique de l'invention.

Pour chaque étape du procédé de collecte de l'invention décrit dans ce document, le premier dispositif électronique au sens de l'invention peut comprendre un module correspondant configuré pour réaliser ladite étape.

L'invention concerne également un système comprenant un premier dispositif électronique et un deuxième dispositif électronique comme définis dans ce document, ces deux dispositifs étant configurés pour coopérer ensemble pour mettre en oeuvre un procédé de collecte conforme à l'invention.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
[Fig. 1] la figure 1 représente schématiquement un système comprenant un premier dispositif électronique et un deuxième dispositif électronique, selon un mode de réalisation particulier de l'invention ;
[Fig. 2] la figure 2 représente schématiquement des modules fonctionnels mis en oeuvre par le premier dispositif électronique de la figure 1, selon un mode de réalisation particulier de l'invention ;
[Fig. 3] la figure 3 représente schématiquement la structure des objets contenus dans les mémoires du système de la figure 1, selon un mode de réalisation particulier de l'invention ;
[Fig. 4] la figure 4 représente, sous forme d'un diagramme, les étapes d'un procédé de collecte conforme à un mode de réalisation particulier de l'invention ;
[Fig. 5-6-7] les figure 5, 6 et 7 représentent schématiquement une arborescence d'objets dans la mémoire du système de la figure 1, au cours d'un procédé de collecte selon un mode de réalisation particulier de l'invention ;
[Fig. 8] la figure 8 représente schématiquement des informations de marquage comprise dans un objet de marquage, selon un mode de réalisation particulier de l'invention ;
[Fig. 9-10] les figure 9 et 10 représentent schématiquement une arborescence d'objets dans la mémoire du système de la figure 1, au cours d'un procédé de collecte selon un mode de réalisation particulier de l'invention ;
[Fig. 11] la figure 11 représente, sous forme d'un diagramme, les étapes d'un procédé de collecte selon un mode de réalisation particulier de l'invention ; et
[Fig. 12] la figure 12 représente, sous forme d'un diagramme, les étapes d'un procédé de collecte selon un mode de réalisation particulier de l'invention.

### Description détaillée de plusieurs modes de réalisation

Comme indiqué précédemment, l'invention vise à collecter des données se présentant sous la forme d'un langage orienté objet dans une architecture comprenant au moins une mémoire volatile et une mémoire non volatile.

Comme bien connu de l'homme du métier, un objet dans le contexte d'un langage interprété orienté objet constitue une instance d'une classe du langage en question. De plus, une classe est un descripteur programmatique regroupant un ensemble d'attributs et de méthodes dans le langage considéré. Comme décrit par la suite, un objet peut être de différente nature et est susceptible de comprendre au moins une référence pointant vers un autre objet (bien que cela ne soit pas nécessairement le cas).

Aujourd'hui, divers types de langages interprétés orientés objet peuvent être compilés en bytecode avant d'être exécutés par un interpréteur (ou compilé par un compilateur). Ainsi, une application Java ou Java Card est habituellement transmise sous forme de bytecode à un dispositif cible tel qu'un élément sécurisé comme évoqué ci-avant. Cet élément sécurisé réalise une compilation ou interprétation, éventuellement à la volée, pour traduire le bytecode en code machine avant exécution. Pour ce faire, l'élément sécurisé met en oeuvre un logiciel spécifique appelé « machine virtuelle », bien connu de l'homme du métier.

Comme déjà indiqué, le chargement de codes interprétables de type bytecode depuis une mémoire non volatile dans une mémoire volatile, notamment dans la RAM d'un élément sécurisé embarqué dans un dispositif hôte, pose des problèmes de gestion de l'espace mémoire.

A cet effet, l'invention, selon différents modes de réalisation, vise notamment un procédé de collecte mis en oeuvre par un premier dispositif électronique comprenant une première mémoire de type volatile, ce premier dispositif électronique coopérant avec un deuxième dispositif électronique comportant une deuxième mémoire de type non volatile. Ce procédé vise notamment à libérer de l'espace mémoire en supprimant des objets dans les première et deuxième mémoires, ces objets constituant chacun l'instance d'une classe d'un langage orienté objet. Pour ce faire, le procédé de collecte implique une analyse d'objets compris dans les première et deuxième mémoires en parcourant, depuis des racines de persistances, une arborescence d'objets déterminée dynamiquement à partir de chaque référence, comprise dans les objets analysés, qui pointe vers un autre objet. Lors de cette analyse, pour chaque objet analysé dans l'arborescence d'objets, le premier dispositif électronique identifie chaque référence comprise dans l'objet analysé et définit le type de la référence, à savoir une référence dite « forte » ou « faible », selon des critères prédéfinis. Ces critères permettent de faire le tri dans les objets de l'arborescence entre ceux qui sont les plus utiles et ceux qui peuvent ou doivent être supprimés lors du procédé de collecte. Cette analyse se poursuit le long de l'arborescence d'objets uniquement pour chaque objet référencé vers lequel pointe une référence forte depuis au moins un objet analysé. Une fois l'analyse achevée, une étape de collecte est réalisée pour supprimer dans les première et deuxième mémoires chaque objet qui n'a pas été analysé lors de ladite analyse.

L'invention vise également le premier dispositif électronique, un système comprenant les premiers et deuxièmes dispositifs électroniques, ainsi qu'un programme d'ordinateur pour l'exécution du procédé de collecte de l'invention et un support d'enregistrement comportant un tel programme d'ordinateur.

D'autres aspects et avantages de la présente invention ressortiront des exemples de réalisation décrits ci-dessous en référence aux dessins mentionnés ci-avant.

Dans ce document, des exemples de mise en oeuvre de l'invention sont décrits dans le cadre d'un élément sécurisé (ES) coopérant avec un dispositif électronique hôte, tel qu'un SOC (pour « System on Chip ») par exemple, dans lequel l'élément sécurisé est embarqué ou intégré. Des mises en oeuvre de l'invention sont toutefois possibles dans d'autres environnements.

Comme défini par l'organisme de standardisation « GlobalPlatform » bien connu de l'homme du métier, un élément sécurisé (pour « secure element ») est une plateforme matérielle et logicielle configurée pour héberger de façon sécurisée des applications et leurs données sensibles associées (clés cryptographiques, algorithmes...), en conformité avec des règles fixées par une autorité tierce de confiance. Un élément sécurisé fournit un environnement d'exécution sécurisé à des applications. Il peut prendre diverses formes, telles qu'un module UICC (pour « Universal Integrated Circuit Card »), un élément sécurisé embarqué (ou « embedded SE » ou encore « eSIM » pour « embedded Subscriber Identity Module ») en tant qu'élément discret ou intégré, ou encore une carte microSD. Un module UICC et une carte microSD sont généralement amovibles. Chaque forme d'élément sécurisé est destinée à être utilisée dans des applications bien particulières et doit répondre à des exigences propres au marché concerné.

Un élément sécurisé peut par exemple être utilisé en téléphonie mobile pour authentifier l'utilisateur d'un terminal de communication auprès d'un réseau mobile auquel il est abonné, ou encore pour mettre en œuvre une application de paiement dans le domaine bancaire.

Toutefois, l'invention ne s'applique pas de manière exclusive aux architectures SE/SOC mais vise de manière plus générale la gestion de l'espace mémoire, et en particulier un processus de collecte, dans une architecture comprenant une première mémoire volatile et une deuxième mémoire non volatile.

L'invention peut s'appliquer dans divers architectures ou systèmes dans lesquels du code interprétable orienté objet doit être chargé dans une première mémoire volatile pour exécuter une application. En particulier, l'invention peut être mise en oeuvre dans une carte à puce, dans un terminal de communication ou dans tout autre système approprié comportant une mémoire volatile et une mémoire non volatile.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

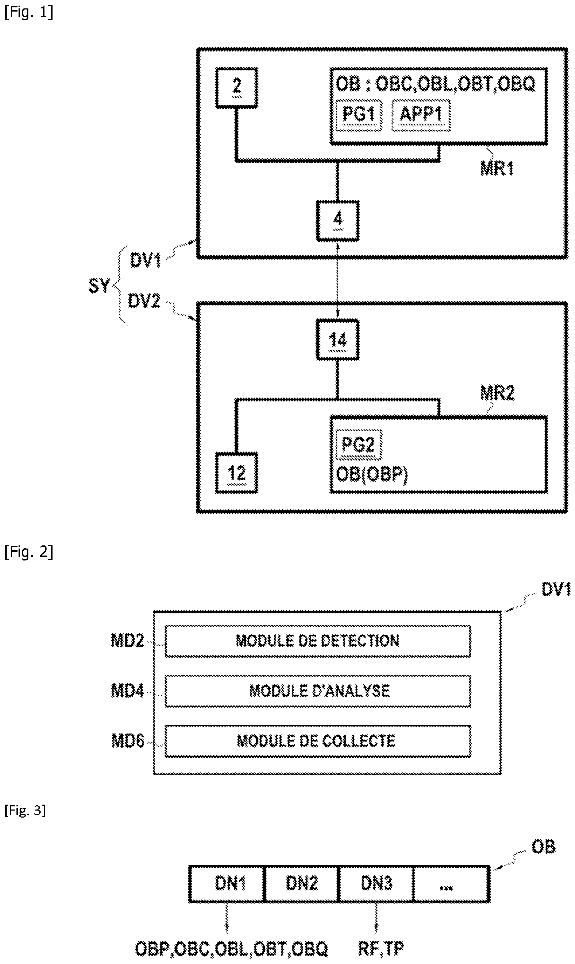

La **figure 1** représente un système SY comportant un premier dispositif électronique DV1 et un deuxième dispositif électronique DV2, selon un mode de réalisation particulier. Les premiers et deuxièmes dispositifs électroniques DV1 et DV2 sont configurés pour coopérer ensemble pour permettre notamment la mise en œuvre d'un procédé de collecte comme décrit ci-après.

Dans l'exemple de réalisation considéré ici, le premier dispositif DV1 est un élément sécurisé (SE) comme déjà décrit précédemment, ce dernier étant intégré ou embarqué dans le deuxième dispositif électronique DV2 (un SOC par exemple) servant de dispositif hôte. Un tel élément sécurisé peut être, par exemple, embarqué, ou intégré sous forme de brique matérielle, dans un modem ou une puce. Plus généralement, l'élément sécurisé peut être une unité de traitement indépendante, configurée pour coopérer de façon sécurisée avec le dispositif électronique hôte, dans lequel est intégré ou embarqué l'élément sécurisé. D'autres implémentations sont toutefois possibles.

Selon l'exemple représenté en **figure 1**, le premier dispositif électronique DV1 et le deuxième dispositif électronique DV2 sont donc deux dispositifs électroniques distincts coopérant ensemble. Le premier dispositif DV1 peut ou non être compris dans le deuxième dispositif DV2. En variante, le premier dispositif électronique DV1 et le deuxième dispositif électronique DV2 forment un seul et même dispositif électronique.

Le premier dispositif électronique DV1 comprend dans cet exemple un processeur 2, une mémoire volatile MR1 (RAM) et une interface de communication 4 pour communiquer avec le deuxième dispositif électronique DV2.

La mémoire volatile MR1 constitue une « première mémoire » au sens de l'invention. Cette mémoire est apte à stocker notamment des objets OB dans un langage orienté objet. Comme décrit plus en détails ultérieurement, les objets OB stockés dans la mémoire volatile MR1 peuvent être de différentes natures, et peuvent comprendre en particulier des objets selon l'un au moins des types suivants : objet clone OBC, objet de localisation OBL, objet transitoire OBT et objet de marquage OBQ, comme décrit en détail ultérieurement.

Les objets OB stockés dans la mémoire volatile MR1 peuvent être associés par exemple à une application APP1 qui est susceptible d'être exécutée par le premier dispositif électronique DV1. Cette application APP1 peut comprendre du code exécutable (ou code interprétable orienté objet) et des données associées. Ce code exécutable peut être interprété par le premier dispositif DV1 en mettant en œuvre un logiciel spécifique, à savoir une machine virtuelle. Ce code exécutable est par exemple codé dans le langage Java ou Java Card, d'autres langages étant toutefois possibles.

La mémoire volatile MR1 constitue un support d'enregistrement (ou support d'informations) conforme à un mode de réalisation particulier, lisible par le premier dispositif électronique DV1, et sur lequel peut être enregistré un programme d'ordinateur PG1 conforme à un mode de réalisation particulier. En variante, ce programme PG1 est stocké dans une mémoire non volatile (non représenté) du premier dispositif DV1. Ce programme d'ordinateur PG1 comporte des instructions pour l'exécution des étapes d'un procédé de collecte qui est décrit ultérieurement selon des modes de réalisation particuliers.

Dans les exemples qui suivent, le programme d'ordinateur PG1 constitue un récupérateur de mémoire, c'est-à-dire un système de gestion automatique de mémoire.

Le deuxième dispositif électronique DV2 comprend dans cet exemple un processeur 12, une mémoire non volatile MR2 (dite aussi mémoire persistante) et une interface de communication 14 pour communiquer avec le premier dispositif électronique DV1.

La mémoire non volatile MR2 constitue une « deuxième mémoire » au sens de l'invention. Cette mémoire MR2 est par exemple une mémoire non volatile réinscriptible, par exemple de type Flash, EEPROM ou autre. Cette mémoire permet de stocker des objets OBP, dits objets persistants, dans un langage orienté objet. Ces objets peuvent être associés par exemple à l'application APP1 exécutable dans le premier dispositif électronique DV1.

La mémoire non volatile MR2 constitue un support d'enregistrement (ou support d'informations) conforme à un mode de réalisation particulier, lisible par le deuxième dispositif électronique DV2, et sur lequel peut être enregistré un programme d'ordinateur PG2 conforme à un mode de réalisation particulier. Ce programme d'ordinateur PG2 est exécuté par le deuxième dispositif DV2 pour coopérer avec le premier dispositif DV1.

De manière générale, l'application APP1, une fois stockée dans la mémoire non volatile MR2 du deuxième dispositif DV2, doit être chargée dans la mémoire volatile MR1 du premier dispositif DV1 pour pouvoir être exécutée. Le premier dispositif DV1 n'a pas d'accès direct, en lecture ou écriture, dans la mémoire non volatile MR2 du deuxième dispositif électronique DV2. Autrement dit, pour accéder en lecture et/ou en écriture à un objet OB, le premier dispositif DV1 doit en premier lieu remonter une copie (un objet clone OBC) de l'objet persistant OBP depuis la mémoire non volatile MR2 vers la mémoire volatile MR1, si une telle copie n'est pas déjà présente dans la mémoire MR2.

A noter que certains éléments généralement présents dans un élément sécurisé et dans un SOC destiné à coopérer avec un tel élément sécurisé, ont été volontairement omis car ils ne sont pas nécessaires à la compréhension de la présente invention.

Le système SY représenté en **figure 1** ne constitue qu'un exemple de réalisation, d'autres mises en oeuvre étant possibles dans le cadre de l'invention. L'homme du métier comprendra en particulier que certains éléments du système SY ne sont décrits ici que pour faciliter la compréhension de l'invention, ces éléments n'étant pas nécessaires pour mettre en oeuvre l'invention.

Par ailleurs, la **figure 2** représente selon un mode de réalisation particulier des modules mis en oeuvre par le processeur 2 piloté par le programme d'ordinateur PG1, à savoir : un module de détection MD2, un module d'analyse MD4 et un module de collecte MD6.

Plus spécifiquement, le module de détection MD2 est configuré pour détecter au moins un objet OB dans la première mémoire MR1 et au moins un objet OB dans la deuxième mémoire MR2 constituant chacun une racine de persistance notée RC. Comme décrit par la suite, ces objets racines RC constituent la base d'une arborescence d'objets que le premier dispositif DV1 peut parcourir pour en analyser les objets constitutifs. Les objets IB de cette arborescence sont reliés entre eux par des références comprises dans certains objets OB, chaque référence pointant vers un unique autre objet.

Le module d'analyse MD4 est configuré pour réaliser une analyse d'au moins une partie des objets OB compris dans les première et deuxième mémoires MR1, MR2 en parcourant, depuis les racines de persistance RC, une arborescence d'objets déterminée dynamiquement à partir de chaque référence, comprise dans les objets analysés, qui pointe vers un autre objet.

Lors de cette analyse, le module d'analyse MD4 réalise un certain nombre d'étapes de manière itérative pour chaque objet OB analysé dans l'arborescence d'objets. En premier lieu, si l'objet OB analysé est dans la mémoire non volatile MR2 et n'a pas de copie dans la mémoire volatile MR1, le module d'analyse MD4 alloue dans la mémoire volatile MR1 un objet OBC, dit objet clone, représentant une copie de l'objet OB analysé ainsi qu'un objet OBL, dit objet de localisation, comprenant une première référence pointant vers l'objet clone OBC dans la première mémoire volatile MR1 et une deuxième référence pointant vers l'objet analysé OB dans la deuxième mémoire non volatile MR2. Toujours lors de cette analyse, le module d'analyse MD4 identifie chaque référence, comprise (le cas échéant) dans l'objet OB analysé, pointant dans l'arborescence d'objets vers un autre objet OB, dit objet référencé puis définit, pour chaque référence identifiée, un type de la référence parmi un premier type, dit référence forte, et un deuxième type, dit référence faible, conformément à des critères prédéfinis.

Comme décrit par la suite, le module d'analyse MD4 débute ainsi l'analyse des objets de l'arborescence par les racines de persistance RC et poursuit cette analyse le long de l'arborescence d'objets uniquement pour chaque objet OB référencé vers lequel pointe une référence forte (premier type) depuis l'objet OB analysé. Ainsi, si tous les objets de l'arborescence vers lesquels pointe au moins une référence forte ont été analysés par le module d'analyse MD4, l'analyse est considérée comme étant achevée.

Le module de collecte MD6 est configuré, sur détection que l'analyse du module d'analyse MD4 est achevée, pour supprimer dans les première et deuxième mémoires MR1, MR2 chaque objet OB qui n'a pas été analysé par le module d'analyse MD4 lors de ladite analyse.

La configuration et le fonctionnement des modules MD2-MD6 définis ci-avant apparaîtront plus précisément dans les exemples de réalisation décrits ci-après. A noter que les modules MD2-MD6 tels que représentés en **figure 2** ne représentent qu'un exemple de mise en œuvre non limitatif de l'invention.

La **figure 3** représente schématiquement la structure d'un quelconque objet OB susceptible d'être stocké dans la première mémoire volatile MR1 ou dans la deuxième mémoire non volatile MR2, selon un mode de réalisation particulier. Chaque objet OB peut ainsi comprendre des métadonnées comportant au moins l'un parmi :
- une donnée de type (ou donnée de classification), notée DN1, définissant le type de l'objet OB considéré (par exemple un objet clone OBC, un objet de localisation OBL, un objet transitoire OBT, un objet de marquage OBQ,...) ;
- une donnée de taille, notée DN2, représentative de la taille de l'objet OB considéré ;
- des données de référence DN3 définissant au moins une référence RF pointant vers un autre objet OB ainsi que, le cas échéant, un type TP de ladite référence RF ; et
- toutes autres informations appropriées.

Chaque objet OB constitue l'instance d'une classe définie dans un langage orienté objet. Un objet OB peut être associé ou non à l'application APP1 exécutable par le premier dispositif DV1. Dans l'affirmative, l'objet OB forme donc l'instance d'une classe dans le langage orienté objet utilisée dans l'application APP1.

A noter que chaque référence RF définie dans les données de référence DN3 pointe vers un unique autre objet OB. Chaque référence RF peut se définir par exemple à partir d'un identifiant (adresse ou autre) de l'autre objet OB vers lequel pointe la référence RF considérée.

Dans cet exemple, un objet persistant OBP désigne un objet (au sens d'un langage orienté objet) stocké de façon persistante dans une mémoire non volatile, à savoir la mémoire MR2 dans cet exemple.

Par ailleurs, comme déjà indiqué, le premier dispositif DV1 n'a pas d'accès direct, en lecture ou écriture, dans la mémoire non volatile MR2 du deuxième dispositif électronique DV2. Autrement dit, pour accéder en lecture et/ou en écriture à un objet persistant OBP présent dans la mémoire non volatile MR2, le premier dispositif DV1 doit générer dans sa mémoire volatile MR1 un objet clone OBC qui constitue une copie de l'objet persistant OBP considéré (si une telle copie n'est pas déjà présente dans la mémoire volatile MR2).

Dans ce document, un objet clone OBC désigne donc un objet (au sens d'un langage orienté objet) qui est stocké dans la mémoire volatile MR1 du premier dispositif DV1 et qui est la copie d'un objet persistant OBP stocké dans la mémoire non volatile MR2 du deuxième dispositif DV2.

Par ailleurs, pour chaque objet clone OBC alloué dans la mémoire volatile MR1, le premier dispositif DV1 enregistre également dans la mémoire volatile MR1 un objet de localisation OBL associé. Un objet de localisation OBL comprend des données de localisation associant un objet persistant OBP dans la mémoire non volatile MR2 avec un objet clone OBC dans la mémoire volatile MR1. Plus précisément, les données de localisation d'un objet de localisation OBL comprennent une première référence d'objet RF indiquant où l'objet persistant OBP est enregistré dans la mémoire non volatile MR2 et une deuxième référence d'objet RF indiquant où l'objet clone OBC associé est enregistré dans la mémoire volatile MR1. Chaque objet de localisation OBL comprend donc au moins deux références RF pointant respectivement vers un objet clone OBC dans la mémoire volatile MR1 et vers un objet persistant OBP associé dans la mémoire non volatile MR2. Un objet de localisation OBL peut éventuellement comprendre une ou une pluralité de références additionnelles pointant vers d'autres objets OB dans la mémoire volatile MR1.

Les références RF définies dans chaque objet de localisation OBL peuvent être par exemple un identifiant d'objet ou une adresse (soit une adresse dans la mémoire volatile MR1 pour référencer un objet clone OBC ou autre, soit une adresse dans la mémoire non volatile MR2 pour référence un objet persistant OBP).

L'enregistrement des données de localisation de chaque objet persistant OBP sous forme d'un objet (dit objet de localisation) OBL permet en particulier d'allouer dynamiquement un espace mémoire de taille adéquate aux données de localisation dans la mémoire volatile MR1, optimisant ainsi l'utilisation de l'espace mémoire. L'affectation statique d'un espace mémoire pour de telles données de localisation bloquerait l'usage d'un espace mémoire plus ou moins important dans la mémoire volatile MR1. Il en résulterait une difficulté pour fixer la taille de cet espace mémoire, qui risquerait d'être soit trop faible pour accueillir toutes les données de localisation, soit trop grande ce qui serait coûteux en ressources et limiterait l'usage de la mémoire volatiles MR1 à d'autres fins. Cet exemple particulier permet d'affecter dynamiquement un espace mémoire adapté dans la mémoire volatile MR1 pour stocker les données de localisation, dont le volume est susceptible de varier.

Dans ce document, un objet transitoire OBT désigne un objet (au sens d'un langage orienté objet) qui est généré et stocké de façon transitoire par le premier dispositif DV1 dans la mémoire volatile MR1, par exemple lors de l'exécution de l'application APP1 ou de tous autres applications ou processus quelconques.

Dans ce document, un objet de marquage OBQ désigne un objet (au sens d'un langage orienté objet) qui est généré et stocké par le premier dispositif DV1 dans la mémoire volatile MR1 au cours du procédé de collecte de l'invention, comme expliqué plus en détail ci-après. Cet objet de marquage OBQ est dédié au récupérateur de données mis en oeuvre par le premier dispositif DV1.

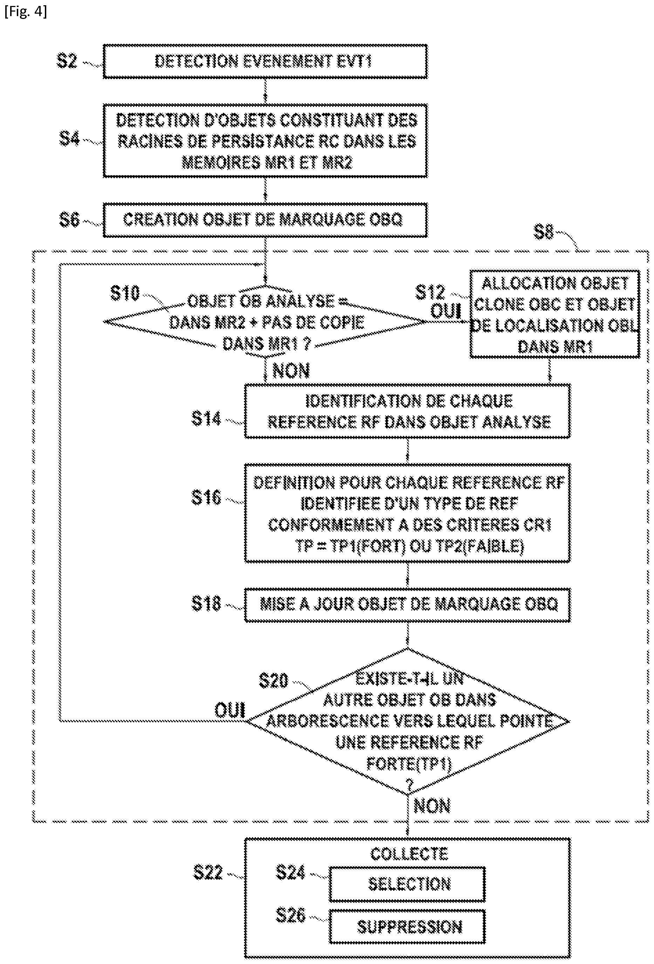

Un mode de réalisation particulier de l'invention est à présent décrit en référence aux **figures 4-12****.** Plus précisément, le premier dispositif électronique DV1 (**figures 1-2**), coopérant avec le deuxième dispositif électronique DV2, met en oeuvre le procédé de collecte de l'invention en exécutant le programme d'ordinateur PG1. Plus particulièrement, le premier dispositif DV1 met en oeuvre un récupérateur de mémoire en exécutant les instructions du programme d'ordinateur PG1.

La **figure 4** représente les étapes mises en oeuvre par le premier dispositif électronique DV1 dans ce mode de réalisation particulier.

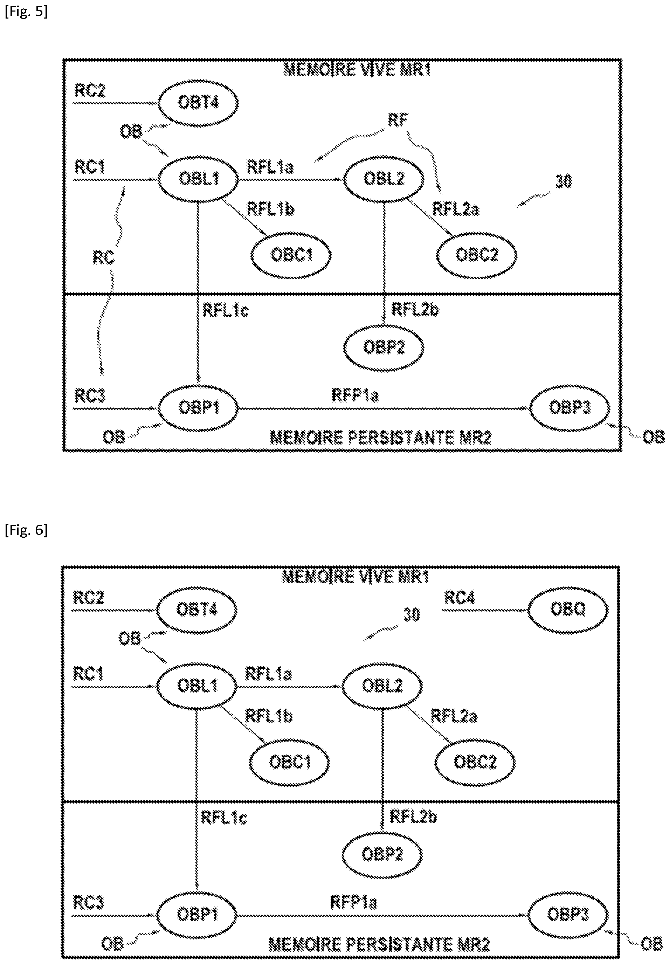

La **figure 5** représente de façon schématique un exemple d'arborescence d'objets 30 à un état initial, c'est-à-dire avant initiation du procédé de collecte. Cette arborescence 30 comprend divers objets OB stockés dans la mémoire volatile MR1 et dans la mémoire non volatile MR2. Ces objets OB sont connectés entre eux par des références RF comprises dans certains objets OB et pointant vers d'autres objets OB. Ces objets interconnectés forment collectivement l'arborescence (ou structure) d'objets 30 dont les racines de persistance RC constituent la base.

On suppose dans le présent exemple qu'au moins une racine de persistance RC est présente dans chacune des mémoires MR1 et MR2. Pour ce faire, il est nécessaire que le premier dispositif DV1 ait transféré au préalable certains objets OB depuis la mémoire non volatile MR2 du deuxième dispositif DV2 dans sa mémoire volatile MR1. L'arborescence d'objets 30 s'étend ainsi dans les mémoires MR1 et MR2.

Comme déjà indiqué, chaque référence RF pointe depuis un objet OB vers un unique autre objet OB. Une référence RF peut pointer depuis un objet OB dans la mémoire volatile MR1 vers un autre objet OB dans la mémoire volatile MR1 ou, alternativement, vers un autre objet OB stocké dans la mémoire non volatile MR2. De même une référence RF peut pointer depuis un objet OB dans la mémoire non volatile MR2 vers un autre objet dans la mémoire non volatile MR2. En revanche, une référence RF ne peut pas pointer depuis un objet OB en mémoire non volatile MR2 vers un autre objet OB en mémoire volatile MR1. Comme le comprend l'homme du métier, le premier dispositif DV1 est ici configuré par défaut pour ne pas créer de référence RF pointant depuis la mémoire non volatile MR2 vers la mémoire volatile MR1 afin d'éviter l'occurrence d'incohérences mémoires dans le cas notamment d'une coupure d'alimentation de la mémoire non volatile.

L'arborescence d'objets 30 représentée en **figure 5** ne constitue qu'un exemple non limitatif visant à faciliter la compréhension de la présente invention.

Au cours d'une étape de détection S2 (**figure 4**), le premier dispositif DV1 détecte un évènement prédéfini EVT1. Sur détection de cet évènement EVT1, le premier dispositif DV1 déclenche un procédé de collecte et procède à l'étape S4 décrite ci-après.

L'évènement prédéfini EVT1 comprend au moins l'un parmi :
- la réception d'une commande émise par un système d'exploitation du premier dispositif électronique DV1 ou par une application APP1 exécutée par le premier dispositif électronique DV1 ; et
- la détection que la mémoire volatile MR1 ou la mémoire non volatile MR2 est saturée ou à atteint un seuil d'occupation prédéfini.

D'autres configurations sont toutefois possibles pour déclencher la réalisation d'un procédé de collecte de l'invention. Le procédé de collecte peut par exemple être déclenché en réponse à une quelconque commande reçue par le premier dispositif DV1, cette commande pouvant par exemple être reçue de l'extérieur ou initiée par un utilisateur du premier dispositif DV1.

Au cours de l'étape S4, le premier dispositif DV1 détecte au moins un objet OB dans la mémoire volatile MR1 et au moins un objet OB dans la mémoire non volatile MR2 constituant des racines de persistance RC de l'arborescence d'objets 30, comme représenté en **figure 5****.** Dans le cas présent, le premier dispositif DV1 détecte ainsi que l'objet de localisation OBL1 et l'objet transitoire OBT4 stockés dans la mémoire volatile MR1 ainsi que l'objet persistant OBP1 stocké dans la mémoire non volatile MR2 constituent chacun des racines de persistance notées respectivement RC1, RC2 et RC3. Ces objets OBL1, OBT4 et OBP1 forment ensemble la base (la racine) depuis laquelle s'étendent les ramifications d'objets de l'arborescence 30. Le nombre et la nature des racines de persistances peuvent varier selon les cas.

En outre, comme représenté en **figure 6**, le premier dispositif DV1 génère et enregistre (S6), dans la mémoire volatile MR1, un objet de marquage OBQ comprenant des informations de marquage. La nature et l'usage de ces informations de marquage apparaîtront plus clairement ci-après. Cet objet de marquage OBQ peut être considéré par le premier dispositif DV1 comme une racine de persistance de l'arborescence 30. Cet objet de marquage OBQ peut le cas échéant être alloué plus tard au cours de l'analyse S8 qui suit. D'autres mises en oeuvre sont également possibles dans lesquelles une partie au moins (voire l'intégralité) des informations de marquage ne sont pas stockées dans un tel objet de marquage OBQ.

Le premier dispositif DV1 réalise ensuite une analyse (S8), appelée également inspection ou scan, d'au moins une partie des objets OB compris dans les première et deuxième mémoires MR1, MR2 en parcourant, depuis les racines de persistance RC détectées en S4, l'arborescence d'objets 30. Pour ce faire, le premier dispositif DV1 détermine (ou découvre) dynamiquement l'arborescence d'objets 30 lors de l'analyse S8 à partir de chaque référence RF, comprise dans les objets OB analysés, qui pointe vers un autre objet OB de l'arborescence.

Lors de l'analyse S8, le premier dispositif DV1 lit ou scanne séquentiellement les objets OB de l'arborescence d'objets 30 en partant des racines de persistance RC1-RC3 et en parcourant l'arborescence d'objets 30 par étage successif. Pour ce faire, pour chaque objet OB analysé, le premier dispositif DV1 identifie la ou les éventuelles références RF définies par cet objet OB pointant vers un ou des autres objets OB d'un étage supérieur de l'arborescence.

Dans cet exemple, le premier dispositif DV1 n'analyse que les objets OB dans les mémoires MR1, MR2 et non les valeurs susceptibles d'être stockées dans ces mémoires. Ce sont les objets OB qui occupent le plus de place dans les mémoires MR1, MR2. Le procédé de collecte vise donc à supprimer ces objets OB pour libérer un maximum d'espace mémoire.

Dans l'exemple de réalisation décrit ici, lors de l'analyse S8, le premier dispositif DV1 réalise de façon itérative les étapes S10-S20 (**figure 4**) pour chaque objet OB analysé, en partant des racines de persistance RC1-RC3 identifiées en S4.

Plus particulièrement, au cours d'une étape de vérification S10, le premier dispositif DV1 détermine si l'objet OB en cours d'analyse - dit objet courant - est dans la mémoire non volatile MR2 et n'a pas de copie (c.-à-d. pas d'objet clone) dans la mémoire volatile MR1. Si c'est deux conditions sont remplies, le procédé se poursuit à l'étape S12. Sinon (c.-à-d. si l'une au moins de ces deux conditions n'est pas remplie), le procédé se poursuit directement à l'étape S14.

Au cours de l'étape d'allocation S12, le premier dispositif DV1 alloue dans la mémoire volatile MR1 un objet clone OBC représentant une copie de l'objet OB courant et alloue également un objet de localisation OBL comprenant une première référence RF pointant vers l'objet clone OBC dans la mémoire volatile MR1 et une deuxième référence RF pointant vers l'objet OB courant dans la mémoire non volatile MR2. L'objet clone OBC et l'objet de localisation OBL ainsi alloués en S12 sont alors intégrés dans l'arborescence d'objets 30 de sorte qu'ils puissent être analysés le cas échéant par le dispositif DV1 lors de l'analyse S8. L'objet de localisation OBL ainsi alloué dans la mémoire volatile MR1 peut être pointé depuis la référence RF d'un autre objet de localisation OB dans la mémoire volatile MR1.

Dans cet exemple, on suppose que le premier dispositif DV1 commence par analyser (S8) l'objet de localisation OBL1 dans la mémoire volatile MR1 (plusieurs choix sont possibles). Le premier dispositif DV1 détecte ainsi en S10 que l'objet courant OBL1 n'est pas stocké dans la mémoire non volatile MR2 (autrement dit, il ne s'agit pas d'un objet persistant OBP) et procède donc à l'étape S14.

Au cours de l'étape d'identification S14, le premier dispositif DV1 identifie chaque référence RF qui est définie (le cas échéant) dans l'objet OB en cours d'analyse (**figure 6**). Pour ce faire, le premier dispositif DV1 lit le contenu de l'objet OB courant et détermine si une ou des références RF sont comprises dans cet objet OB.

Dans cet exemple, on suppose que le premier dispositif DV1 identifie que l'objet de localisation OBL1 comprend 3 références RF, à savoir :
- une référence RFL1a pointant vers un autre objet de localisation OBL2 stocké dans la mémoire volatile MR1 ;
- une référence RFL1b pointant vers un objet clone OBC1 associé qui est stocké dans la mémoire volatile MR1 ; et
- une référence RFL1c pointant vers un objet persistant OBP1 associé qui est stockée dans la mémoire non volatile MR2.

On suppose ici que les références RFL1a, RFL1b et RFL1c comprennent des adresses identifiant respectivement les objets OBL2, OBC1 et OBP1. L'objet clone OBC1 représente donc ici une copie de l'objet persistant OBP1.

Le premier dispositif DV1 réalise ensuite une étape de définition S16 au cours de laquelle il définit, pour chaque référence RF identifiée en S14 dans l'objet OB courant, un type TP de ladite référence RF parmi un premier type TP1, dit référence « forte », et un deuxième type TP2, dit référence « faible », conformément à des critères prédéfinis CR1. Autrement dit, le premier dispositif DV1 applique des critères prédéfinis CR1 pour déterminer le type TP respectif - soit TP1, soit TP2 - pour chaque référence RF identifiée dans l'objet OB courant.

Divers critères prédéfinis CR1 peuvent être mis en oeuvre selon le cas, comme le comprend l'homme du métier. Comme cela apparaîtra plus clairement par la suite, ces critères CR1 sont définis de sorte à faire un tri dans les objets OB de l'arborescence 30 entre ceux qui sont considérés comme étant les plus utiles et ceux qui peuvent ou doivent être supprimés lors du procédé de collecte.

Les références de type TP1 et TP2 sont dénommés respectivement références « fortes » et « faibles » par souci de simplicité, bien que d'autres appellations soient possibles.

Toujours dans cet exemple, on suppose que les critères prédéfinis CR1 prévoient que chaque référence RF d'un objet OB courant est définie en tant que référence faible (TP2) lors de l'analyse S8 si au moins l'une des conditions suivantes est satisfaite :
a) ladite référence RF pointe vers un quelconque objet OB (à savoir un objet clone ou un objet de localisation) qui a été alloué dans la mémoire volatile MR1 au cours de l'analyse S8 ; et
b) la référence RF considérée est une référence d'un objet de localisation OBL compris dans la mémoire volatile MR1, cette référence RF pointant vers un objet OB associé (c.-à-d. un objet persistant OBP) compris dans la mémoire non volatile MR2.

Autrement dit, si l'une quelconque ou les deux conditions a) et b) ci-dessus sont remplies, la référence RF considérée est définie (S16) en tant que référence du deuxième type TP2 (référence faible). A noter que si l'objet courant est un objet de localisation OBL, sa référence RF vers l'objet persistant OBP correspondant dans la mémoire non volatile MR2 est toujours définie en tant que référence faible, que cet objet OBP ait été alloué dans la mémoire volatile MR1 pendant ou antérieurement à l'analyse S8.

Dans cet exemple, si aucune des conditions a) et b) n'est satisfaite, la référence RF considérée est définie comme étant une référence forte (type TP1).

Autrement dit, les critères prédéfinis CR1 prévoient dans cet exemple que chaque référence RF d'un objet OB en cours d'analyse est définie (S16) en tant que référence forte (type TP1) si ladite référence RF pointe vers un objet OB (objet clone OBC ou objet de localisation OBL) qui a été alloué dans la mémoire volatile MR1 antérieurement à l'analyse S8 et si la référence RF en question ne pointe pas depuis la mémoire volatile MR1 vers la mémoire non volatile MR2.

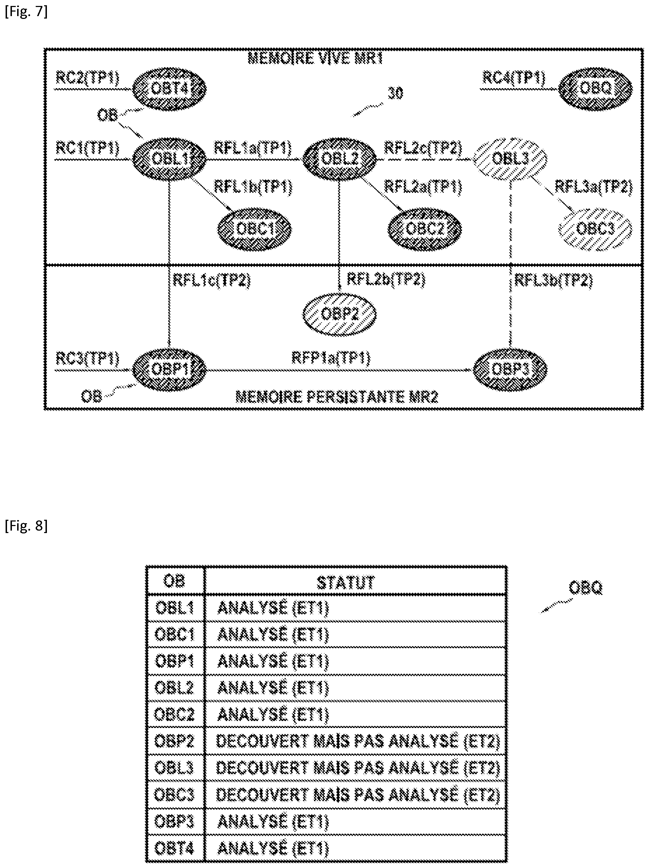

Ainsi, dans l'exemple considéré ici, le premier dispositif DV1 définit (S16) pour l'objet courant OBL1 les références RFL1a et RFL1b en tant que références fortes (type TP1) et la référence RFL1c en tant que référence faible (type TP2) car cette dernière pointe depuis la mémoire volatile MR1 vers la mémoire non volatile MR2 (**figure 7**).

Dans cet exemple, le premier dispositif DV1 enregistre le type TP de chaque référence RF dans l'objet OB courant lui-même. Plus précisément, le premier dispositif DV1 encode, dans les données de référence DN3 de l'objet courant OBL1, le premier type TP1 (référence forte) en association avec les références RFL1a et RFL1b et le deuxième type TP2 (référence faible) en association avec la référence RFL1c (**figure 3**). Les données de référence DN3 peuvent donc ici prendre par exemple la forme d'un bit respectif codant soit la valeur TP1, soit la valeur TP2, pour chaque référence RF définie dans l'objet OB en question.

Toujours lors de l'analyse S8, le premier dispositif DV1 met à jour (S18, **figure 4**) l'objet de marquage OBQ dans la mémoire volatile MR1 en y spécifiant que l'objet OB courant (en l'occurrence OBL1 dans cet exemple) a été analysé lors de l'analyse S8.

On considère ainsi qu'un objet OB a été analysé (ou inspecté) au sens de l'invention lorsque les étapes S14 et S16 ont été achevées, c'est-à-dire lorsque chaque référence RF de l'objet OB considéré a été identifiée et que son type TP respectif a été défini.

A noter que si, lors de l'étape d'identification S14, le premier dispositif DV1 détecte que l'objet courant OB ne comprend aucune référence RF, le procédé se poursuit directement à l'étape de mise à jour S18, sans réaliser l'étape de définition S16.

De manière générale, l'objet de marquage OBQ alloué en S6 dans la mémoire MR1 comprend des informations de marquage associées aux objets OB de l'arborescence 30, ces objets OB étant dans la mémoire MR1 ou MR2. Ces informations de marquage indiquent pour chaque objet OB de l'arborescence 30 si ledit objet a déjà été analysé lors de l'analyse S8 ou non. En les mettant à jour régulièrement (étape S18), ces informations de marquage permettent au premier dispositif DV1 de suivre l'avancement de l'analyse S8 objet par objet dans l'arborescence d'objets 30.

Dans cet exemple, toutes les informations de marquage sont centralisées dans un même objet de marquage OBQ, bien que d'autres implémentations soient possibles. De cette manière, on peut allouer dynamiquement une adresse à l'objet de marquage OBQ avec une espace mémoire variable, ce qui permet d'économiser de l'espace mémoire dans la mémoire volatile MR1.

Selon une variante de réalisation, les informations de marquage relatives par exemple aux objets OB stockés dans la mémoire volatile MR1 sont stockées non pas dans l'objet de marquage OBQ mais de façon décentralisée dans chaque objet OB correspondant dans la mémoire volatile MR1. Il est également possible d'enregistrer les informations de marquage relatives aux objets persistants OBP directement dans les objets correspondants dans la mémoire non volatile MR2, bien que cela nécessite d'écrire dans la mémoire non volatile MR2 ce qui peut être plus coûteux en ressources et en temps.

Dans cet exemple, on suppose que les informations de marquage de l'objet de marquage OBQ spécifient, pour chaque objet OB, l'un parmi les 3 états distincts suivants :
i) un premier état ET1 (analysé) signifiant que l'objet OB a déjà été analysé lors de l'analyse S8,
ii) un deuxième état ET2 (état intermédiaire) signifiant que l'objet OB n'a pas encore été analysé mais qu'une référence RF pointant vers ledit objet OB a déjà été identifiée lors ladite analyse S8, et
iii) un troisième état ET3 (non découvert) signifiant que l'objet OB n'a pas encore été analysé et qu'aucune référence RF pointant vers ledit objet OB n'a encore été identifiée lors de l'analyse S8.

Ainsi, la mise à jour S18 est réalisée dans cet exemple de sorte que les informations de marquage de l'objet de marquage OBQ définissent l'un parmi les 3 états précités ET1, ET2 et ET3 pour chaque objet OB à un instant courant. En particulier, l'état ET2 correspond à un état intermédiaire dans lequel un objet OB n'a pas encore été analysé mais a déjà été découvert lors de l'analyse S8 grâce à au moins une référence RF identifiée dans un autre objet, qui pointe vers ledit objet OB.

Dans la suite de cet exemple, on adopte l'abstraction selon Dijkstra *et al* pour représenter visuellement l'état de chaque objet OB au cours de l'analyse S8 de façon à faciliter la compréhension de l'invention. Selon le modèle de Dijkstra, on attribue à chaque objet OB de l'arborescence 30 une couleur représentative de l'état courant de l'objet considéré selon l'un parmi les 3 états précités ET1, ET2 et ET3, de sorte que :
- un objet OB à l'état ET1 (objet déjà analysé lors de l'analyse S8) est représenté en noir ;
- un objet OB à l'état intermédiaire ET2 (objet pas encore analysé mais pour lequel au moins une référence RF d'un autre objet pointant vers lui a déjà été identifiée) est représenté en gris ; et
- un objet OB à l'état ET3 (objet pas encore analysé et pour lequel aucune référence RF pointant vers lui n'a encore été identifiée) est représenté en blanc.

D'autres représentations sont toutefois possibles.

En outre, une fois la mise à jour S18 réalisée, le premier dispositif DV1 détermine (S20, **figure 4**) s'il existe au moins un autre objet OB dans l'arborescence d'objets 30 qui n'a pas encore été analysé lors de l'analyse S8 et vers lequel pointe au moins une référence RF forte (de type TP1) depuis un objet OB qui a déjà été analysé. Autrement dit, le premier dispositif DV1 vérifie en S20 s'il existe dans l'arborescence d'objets 30 encore au moins un objet OB dans l'état intermédiaire ET2 (couleur grise selon le modèle Dijkstra) et vers lequel pointe au moins une référence RF forte (TP1). Si tel est le cas, le premier dispositif DV1 poursuit l'analyse S8 en réalisant à nouveau les étapes S10-S20 pour chaque objet OB détecté dans cet état intermédiaire ET2 et vers lequel pointe au moins une référence RF forte (TP1). Dans le cas contraire, l'analyse S8 prend fin et le procédé se poursuit avec l'étape de collecte S22.

Ainsi, l'analyse S8 débute par les racines de persistance RC et se poursuit le long de l'arborescence d'objets 30 uniquement pour chaque objet OB référencé (de couleur grise selon Dijkstra) vers lequel pointe au moins une référence RF forte (type TP1) depuis un objet OB qui a déjà été analysé (de couleur noir selon Dijkstra). Dans le présent exemple, on peut considérer que les racines de persistance RC détectées préalablement en S4 constituent elles-mêmes des références fortes (type TP1).

Ainsi, dans l'exemple considéré ici, on suppose que le premier dispositif DV1 détecte (S20) que l'objet transitoire OBT4, l'objet persistant OBP1, l'objet OBC1 et l'objet de localisation OBL2 sont tous dans l'état intermédiaire ET2 (gris) et qu'au moins une référence RF forte (TP1) pointe vers chacun de ces objets. Le premier dispositif DV1 répète donc les étapes S10-S20 comme déjà décrit ci-avant pour analyser les objets OBT4, OBP1, OBC1 et OBL2. En analysant ces objets, le premier dispositif DV1 identifie (S14) ainsi la ou les éventuelles références RF associées et définit leur type TP respectif selon les critères prédéfinis CR.

Comme représenté en **figure 7**, on suppose à présent que l'analyse S8 (**figure 4**) s'est poursuivi et que le premier dispositif DV1 a analysé les objets suivants :
- l'objet OBL1 comprenant la référence forte RFL1a pointant vers l'objet de localisation OBL2, la référence forte RFL1b pointant vers l'objet clone OBC1 et la référence faible RFL1c pointant vers l'objet persistant OBP1 ;
- l'objet clone OBC1 qui ne comprend aucune référence RF ;
- l'objet de localisation OBL2 comprenant une référence forte RFL2a pointant vers un objet clone OBC2 et une référence faible RFL2b pointant vers un objet persistant OBP2 situé dans la mémoire non volatile MR2 ;
- l'objet clone OBC2 qui ne comprend aucune référence RF ;
- l'objet transitoire OBT4 qui ne comprend aucune référence RF ;
- l'objet persistant OBP1 qui comprend une référence forte RFPla pointant vers un autre objet persistant OBP3 dans la mémoire non volatile MR2 ; et
- l'objet persistant OBP3 qui ne comprend aucune référence RF.

En outre, toujours lors de l'analyse (S8) de l'objet persistant OBP3, le premier dispositif détecte en S10 que cet qu'objet courant OBP3 est stocké dans la mémoire non volatile MR2 et qu'il ne dispose pas de copie dans la mémoire volatile MR1. Par conséquent, comme déjà décrit précédemment, le premier dispositif DV1 alloue (S12) dans la mémoire volatile MR1 un objet de localisation OBL3 et un objet clone OBC3 associés à l'objet courant OBP3, comme représenté en **figure 7**. L'objet de localisation OBL3 comprend ainsi une première référence RFL3a pointant vers l'objet clone OBC3 dans la mémoire volatile MR1 et une deuxième référence RFL3b pointant vers l'objet persistant OBP3 dans la mémoire non volatile MR2. Ces nouveaux objets OBL3 et OBC3 sont alors intégrés dans l'arborescence d'objets 30. Dans cet exemple, le premier dispositif DV1 définit en outre une référence RFL2c pointant depuis l'objet de localisation OBL2 dans la mémoire volatile MR1 vers l'objet de localisation OBL3 dans la mémoire volatile MR1. Le système d'exploitation (OS) du premier dispositif DV1 connaît la structure qui stocke les objets de localisation OBL puisque c'est lui qui la maintient, comme le comprend l'homme du métier. Dans cet exemple de réalisation, cette structure est une liste chaînée d'objets OB, comme représentée en **figure 7****.** Le système d'exploitation sait trouver la fin d'une liste chaînée à laquelle doit être connecté un objet de localisation OBL nouvellement créé. Cette nouvelle référence RFL2c est ainsi identifiée (S14) et définie (S16) en tant que référence faible (TP2) conformément aux critères prédéfinis CR1 déjà décrits ci-avant car l'objet de localisation OBL3 vers lequel pointe la référence RFL2c a été alloué au cours de l'analyse S8 (la condition a) précitée est remplie).

Dans cet exemple, le premier dispositif DV1 détecte (S14) que l'objet persistant OBP3 en cours d'analyse ne comprend aucune référence RF et met donc à jour (S18) l'objet de marquage OBQ pour y spécifier que l'objet persistant OBP3 a été analysé (couleur noire selon le modèle Dijkstra).

Comme représenté en **figure 7**, à ce stade, les objets OBL1, OBC1, OBP1, OBL2, OBC2, OBP3, OBT4 sont tous dans l'état ET1 (couleur noire selon Dijkstra) puisqu'ils ont été complètement analysés (ou inspectés) par le premier dispositif DV1. L'objet persistant OBP2 est en revanche dans l'état intermédiaire ET2 (couleur grise selon Dijkstra) puisque la référence RFL2b pointant vers lui a été découverte lors de l'analyse de l'objet de localisation OBL2 mais que cette seule référence pointant vers lui est de type TP2 (faible) de sorte que l'objet OBL2 n'a pas été analysé.

Toujours dans cet exemple, puisque seule une référence faible (à savoir RFL2c) pointe vers l'objet de localisation OBL3, ce dernier n'est pas analysé au cours de l'analyse S8 selon les étapes S10-S20 déjà décrites ci-avant (étape S20, **figure 4**). L'analyse S8 ne se poursuit donc pas le long de l'arborescence 30 depuis l'objet de localisation OBL2 vers l'objet de localisation OBL3. L'objet clone OBC3 n'est donc pas non plus analysé lors de l'analyse S8 puisqu'il n'est relié dans l'arborescence 30 que par la référence RFL3a émanant de l'objet de localisation OBL3 (**figure 7**). Cette référence RFL3a reliant deux objets OB alloués au cours de l'analyse S8 est considérée comme une référence faible (type TP2) par le premier dispositif DV1.

La référence RFL3b pointant depuis l'objet de localisation OBL3 vers l'objet persistant OBP3 est également considérée comme étant une référence faible (type TP2) car elle est comprise dans un objet (OBL3) qui a été alloué au cours de l'analyse S8 (**figure 7**).

A ce stade, on considère dans cet exemple que l'analyse S8 est achevée. Comme représenté en **figure 8**, l'objet de marquage OBQ qui a été mis à jour tout au long de l'analyse S8 indique alors que tous les objets OB précités de l'arborescence 30 ont été analysés (état ET1, couleur noire selon Dijkstra), à l'exception des objets OBP2, OBL3 et OBC3 qui sont dans l'état intermédiaire ET2 (couleur grise selon Dijkstra) car, bien qu'ils aient été découverts lors de l'analyse S8, ils n'ont pas été analysés car aucune référence RF forte (type TP1) ne pointe vers eux.

L'analyse S8 est considérée achevée lorsque tous les objets OB atteignables dans l'arborescence 30 depuis au moins une racine de persistance RC au travers exclusivement de références RF fortes (type TP1) ont été analysés. Autrement dit, le premier dispositif DV1 détecte (S20) que l'analyse S8 est achevée lorsqu'il a analysé tous les objets OB de l'arborescence d'objets 30 vers lesquels pointe au moins une référence RF forte.

D'autres objets OB (non représentés) - dits objets externes - qui ne font pas partie de l'arborescence d'objets 30 sont également susceptibles d'être présents dans la mémoire volatile MR1 et/ou dans la mémoire non volatile MR2. Aucune référence RF ne pointe depuis un objet OB de l'arborescence 30 vers un objet externe OB. Une fois que l'analyse S8 est achevée, chaque objet externe OB présent dans la mémoire volatile MR1 et dans la mémoire non volatile MR2 se trouve dans l'état ET3 (couleur blanche selon Dijkstra) dans la mesure où ces objets n'ont pas été découverts lors de l'analyse S8.

Selon une variante, les informations de marquage comprises dans l'objet de marquage OBQ ne portent que sur les objets OB qui sont présents dans l'arborescence d'objets 30 à l'initiation du procédé de collecte (lors de l'étape S6). Dans ce cas, lorsque le premier dispositif DV1 alloue de nouveaux objets dans la mémoire volatile MR1 au cours de l'analyse S8, ces nouveaux objets ne sont pas spécifiés dans les informations de marquage. Par défaut, les objets OB générés au cours de l'analyse S8 (inconnus dans les informations de marquage) sont considérés comme n'étant pas analysés lors de l'analyse S8.

Sur détection que l'analyse S8 est achevée, le premier dispositif DV1 réalise une étape de collecte S22 (**figure 4**) dans les mémoires MR1 et MR2 pour supprimer chaque objet OB qui n'a pas été analysé lors de l'analyse S8. Autrement dit, les objets OB qui sont dans l'état intermédiaire ET2 (gris selon le modèle Dijkstra) ou dans l'état ET3 non découvert (blanc selon le modèle Dijkstra) sont considérés comme étant inatteignables dans l'arborescence d'objets 30 et sont par conséquent supprimés afin de libérer de l'espace mémoire. Un objet OB est considéré inatteignable s'il n'est pas relié à l'une des racines de persistance RC (RC1, RC2 ou RC3 dans cet exemple) au travers uniquement de références RF fortes (type TP1) dans l'arborescence d'objets 30.

Ainsi, les objets de l'arborescence 30 vers lequel ne pointe aucune référence RF forte, ainsi que les objets OB externe à l'arborescence 30, sont supprimées dans les mémoires MR1 et MR2.

Dans l'exemple considéré ici, le premier dispositif DV1 réalise cette étape de collecte S22 en sélectionnant (S24, **figure 4**) les objections OB à supprimer en fonction des informations de marquage comprises dans l'objet de marquage OBQ. Comme déjà indiqué, les informations de marquage permettent d'identifier les objets OB qui ont été analysées lors de l'analyse S8 et ceux qui ne l'ont pas été. Une fois la sélection S24 réalisée, le premier dispositif DV1 supprime (S26) les objets OB sélectionnés en S22.

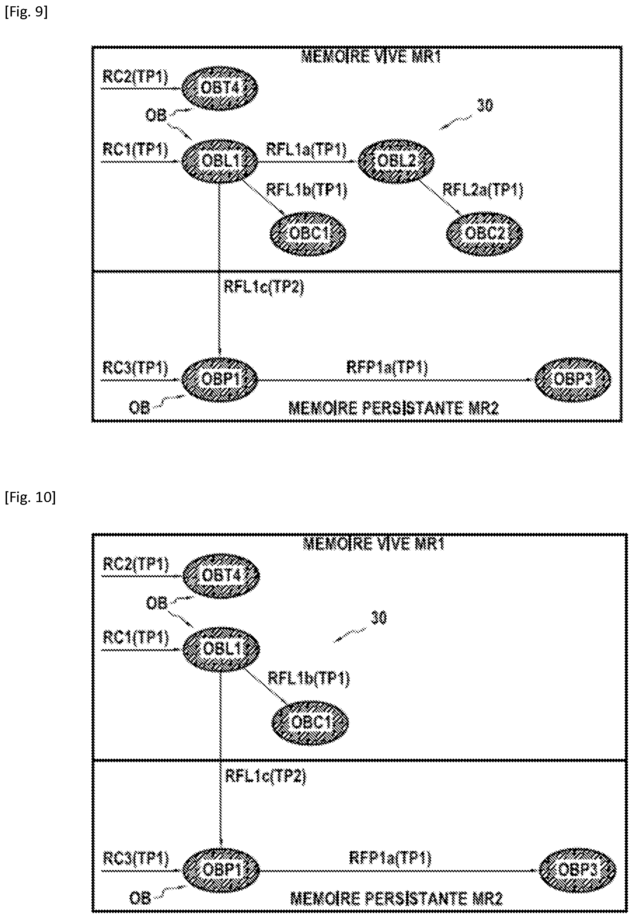

Comme représenté en **figure 9**, dans cet exemple particulier, le premier dispositif sélectionne (S24) et supprime (S26) donc l'objet OBP2 dans la mémoire non volatile MR2 ainsi que les objets OBL3 et OBC3 dans la mémoire volatile MR1.

La collecte S22 peut éventuellement est interrompue avant suppression de tous les objets OB sélectionnés en S24, si le premier dispositif DV1 détecte qu'un espace mémoire suffisant a été libéré dans les mémoires MR1 et MR2.

En outre, comme représenté également en **figure 9**, le premier dispositif DV1 peut également supprimer l'objet de marquage OBQ dans la mémoire volatile MR1 lors de l'étape de collecte S22, afin de libérer encore plus d'espace mémoire.

L'objet de marquage OBQ peut ainsi être supprimé lors de la collecte S22 à l'issue de la phase d'analyse S8. L'objet de marquage OBQ peut être conservé jusqu'à la fin de l'analyse S8 afin de permettre au premier dispositif DV1 de déterminer quand l'analyse S8 arrive à son terme. En variante, l'objet de marquage OBQ peut être conservé lors de la collecte S22 s'il n'y pas besoin de gagner plus d'espace mémoire dans la mémoire volatile MR1. S'il est collecté, la collecte de l'objet de marquage est réalisée à la fin du processus de collecte afin de permettre au premier dispositif DV1 de savoir quels objets OB il faut conserver.

Selon un mode de réalisation particulier, lors de l'étape de création S6 et des étapes de mise à jour S18, l'objet de marquage OBQ est enregistré dans un conteneur mémoire avec chaque autre objet OB, de l'arborescence d'objets 30, contenu dans la mémoire volatile MR1.

Dans le présent document, un conteneur mémoire est une abstraction logicielle d'un espace mémoire physique, généralement borné en taille (exemple: le tas d'objet est un conteneur d'objet). Le système d'exploitation du premier dispositif DV1 est typiquement en charge de fournir des routines d'allocation et de libération pour utiliser ce conteneur.

Plus généralement, le premier dispositif DV1 peut stocker dans sa mémoire volatile MR1 divers types d'objet, en particulier des objets de localisation OBL, des objets clones OBC et des objets transitoires OBT. Le premier dispositif DV1 peut être configuré pour stocker tous ces objets dans un même conteneur dans sa mémoire volatile MR1.

En faisant cohabiter tous ces objets dans un même conteneur mémoire dans la mémoire volatile MR1, on permet une utilisation maximale de la mémoire volatile MR1 par rapport à une solution basée sur de la segmentation mémoire. En effet, une segmentation suppose de créer statiquement plusieurs conteneurs, à savoir au moins : un conteneur pour les données de localisation OBL, un conteneur pour les objets clones OBC et un conteneur pour les objets transitoires OBT. Il est cependant difficile d'estimer à l'avance les tailles optimales pour chacun de ces conteneurs. Le nombre d'objets qui sont chargés dans la mémoire volatile MR1 dépend notamment des commandes exécutées lors de l'exécution de l'application APP1. Une exécution est donc plus performante en consommation mémoire si l'on fait cohabiter les objets précités dans un même conteneur mémoire.

Comme représenté en **figure 10**, lors de l'étape de collecte S22, le premier dispositif DV1 peut également supprimer dans la mémoire volatile MR1 chaque objet clone OBC représentant la copie d'un quelconque objet OB supprimé dans la mémoire non volatile MR2 lors de la collecte S22. Autrement dit, lorsque le premier dispositif DV1 collecte un objet persistant OBP dans la mémoire non volatile MR2, il appelle une première routine de finalisation pour collecter (supprimer) également l'objet clone OBC associé dans la mémoire volatile MR1. Dans le présent exemple, l'objet clone OBC2 est donc supprimé dans la mémoire volatile MR1 en réponse à la suppression de l'objet persistant OBP2 dans la mémoire non volatile MR2. La suppression de l'objet clone OBC2 (bien que relié à l'objet OBL2 par une référence RF forte) permet de libérer plus d'espace mémoire et d'éviter d'éventuelles corruptions de mémoire.

Comme représenté en **figure 10**, lors de l'étape de collecte S22, le premier dispositif DV1 peut également supprimer dans la mémoire volatile MR1 chaque objet de localisation OBL qui est associé à un quelconque objet clone OBC supprimé dans la mémoire volatile MR1 lors de la collecte S22. Autrement dit, lorsque le premier dispositif DV1 collecte un objet clone OBC dans la mémoire volatile MR1, il appelle une deuxième routine de finalisation pour collecter (supprimer) également l'objet de localisation OBL associé dans la mémoire volatile MR1. Dans le présent exemple, l'objet de localisation OBL2 est donc supprimé avec l'objet clone OBC2 dans la mémoire volatile MR1. La suppression de l'objet de localisation OBL2 (bien que relié à l'objet OBL1 par une référence RF forte) permet de libérer plus d'espace mémoire et d'éviter d'éventuelles corruptions de mémoire.

De façon générale, les première et deuxième routines de finalisation mentionnées ci-avant permettent ensemble de libérer davantage d'espace mémoire en supprimant l'objet de localisation OBL et l'objet clone OBC associés à chaque objet persistant OBP qui est supprimé dans la mémoire non volatile MR2 lors de la collecte S22.

L'invention permet avantageusement de mettre en œuvre un récupérateur de mémoire (garbage collecter) efficace dans une architecture (le système SY) comprenant une mémoire volatile MR1 et une mémoire non volatile MR2, stockant des objets OB issus d'un langage orienté objet, de façon à libérer rapidement et avec un coût limité de l'espace mémoire dans ces mémoires. Lors de ce processus de collecte, on conserve en mémoire autant que possible des objets OB pertinents susceptibles d'être invoqués par la suite par le premier dispositif DV1, à partir de critères CR1 qui sont prédéfinis en ce sens.

Le récupérateur de mémoire de l'invention permet de sélectionner et supprimer les objets inatteignables contenus aussi bien dans une mémoire volatile que dans une mémoire non volatile du système, afin de libérer un maximum d'espace mémoire.

L'invention est compatible avec des applications de type interprété, notamment avec du bytecode Java Card.

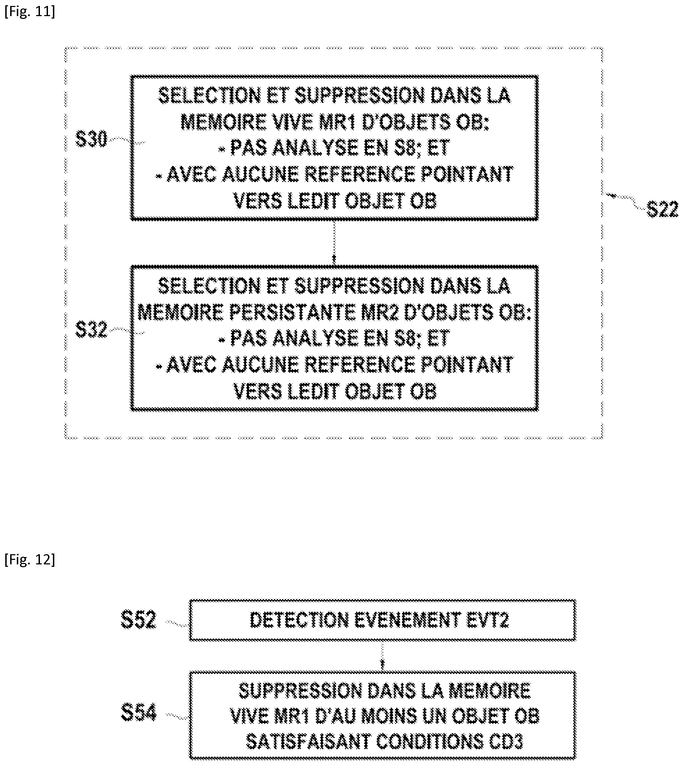

Selon un mode de réalisation particulier représenté en **figure 11**, lors de l'étape de collecte S22, le premier dispositif DV1 met en œuvre un mécanisme de collecte progressive au cours duquel il supprime par ordre de priorité décroissante :
- au moins un premier objet OB à l'état ET3 dans la mémoire volatile MR1 qui n'a pas été analysé lors de l'analyse S8 et pour lequel aucune référence RF n'a été identifiée comme pointant vers ledit au moins un premier objet OB (étape S30) ; puis
- au moins un deuxième objet OB à l'état ET3 dans la mémoire non volatile MR2 qui n'a pas été analysé lors de l'analyse S8 et pour lequel aucune référence RF n'a été identifiée comme pointant vers ledit au moins un deuxième objet OB (étape S32).

Dans ce cas, le premier dispositif DV1 peut ainsi supprimer (S30) en premier lieu tous les objets OB qui n'ont pas été analysés ni même découverts (état ET3) dans la mémoire volatile MR1 lors de l'analyse S8, puis tous les objets OB qui n'ont pas été analysés ni même découverts (état ET3) dans la mémoire non volatile MR2 lors de l'analyse S8.

Ce mécanisme de collecte progressive permet de réaliser en priorité la collecte des objets non découverts (blancs selon le modèle Dijkstra) lors de l'analyse S8, et ce en 2 passes successives d'ordre de priorité décroissante. On supprime en priorité les objets OB non analysés dans la mémoire volatile MR1 pour lesquels aucune référence RF n'a été identifiée comme pointant vers ledit objet, puis les objets OB dans la même situation dans la mémoire non volatile MR2. La collecte S22 peut éventuellement être interrompue avant suppression de tous les objets OB non découverts lors de l'analyse S8, si le premier dispositif DV1 détecte qu'un espace mémoire suffisant a été libéré dans les mémoires MR1 et MR2.

Chaque suppression revient à une opération d'écriture, celle-ci étant plus coûteuse en temps et en ressources dans la mémoire non volatile MR2 que dans la mémoire volatile MR1. Ainsi, ce mécanisme de collecte progressive permet donc d'augmenter la vitesse de collecte en supprimant en priorité des objets OB dans la mémoire volatile MR1. Cette variante sollicite au minimum la mémoire persistante pour des raisons de performances en vitesse et en consommation d'énergie.

En outre, ce mécanisme de collecte progressive permet de libérer uniquement l'espace nécessaire dans les mémoires MR1 et MR2, en conservant au maximum l'effet de cache dans la mémoire volatile MR1. On libère en priorité dans la mémoire volatile MR1 les objets qui sont le moins susceptibles d'être invoqués par la suite car ils ne sont pas atteignables via des références RF fortes dans l'arborescence d'objets 30 depuis les racines RC. Les critères prédéfinis CR1 décrits précédemment permettent de trier les objets OB qui sont le plus susceptibles d'être invoqués ultérieurement parmi tous les objets présents dans les mémoires MR1 et MR2.

Par ailleurs, comme indiqué ci-avant, chaque analyse d'objet requiert un objet clone OBC dans la mémoire volatile MR1. Si un tel objet clone n'existe pas, elle doit être allouée dans la mémoire volatile MR1. En raisons des limitations intrinsèques de taille, la mémoire volatile MR1 est susceptible d'être saturée (pleine) avant la fin de l'analyse S8 de tous les objets OB de l'arborescence 30. Le premier dispositif DV1 peut donc également mettre en oeuvre une collecte anticipée au cours de l'analyse S8 (avant son achèvement) de façon à sélectionner et supprimer des objets OB adéquats dans les mémoires MR1 et MR2, libérant ainsi suffisamment d'espace mémoire pour poursuivre l'analyse S8.

Lors de cette collecte anticipée, le premier dispositif DV1 peut par exemple supprimer en priorité des objets OB de l'arborescence 30 qui ont déjà été analysés (état ET1, couleur noire selon le modèle Dijkstra) et qui ne sont pas associés à une application APP1 en cours d'exécution. On évite en revanche de supprimer les objets clones OBC qui ont été créés pour l'application en cours APP1. Cette application APP1 bénéficie ainsi de ses objets clones toujours présents dans la mémoire volatile MR1, facilitant ainsi l'accès aux données utiles.

On entend dans ce document par application en cours d'exécution une quelconque application que le premier dispositif DV1 exécute au moment du procédé de collecte ou qui a été interrompue avant l'initiation du procédé de collecte et dont l'exécution est susceptible de reprendre une fois le procédé de collecte achevé.

Selon un exemple particulier représenté en **figure 12**, sur détection (S52) d'un évènement prédéfini EVT2 avant achèvement de l'analyse S8, le premier dispositif DV1 réalise une collecte anticipée au cours de laquelle il effectue une suppression (S54) dans la mémoire volatile MR1 en priorité d'au moins un objet OB, dit objet collecté, qui satisfait les conditions CD3 suivantes :
- l'objet OB (état ET1, noir selon le modèle Dijkstra) collecté a déjà été analysé au cours de l'analyse S8 ;
- l'objet OB collecté n'est pas associé à une application APP1 en cours d'exécution ; et
- l'objet OB est un objet clone OBC ou un objet de localisation OBL.

Cet évènement EVT2 correspond par exemple à la saturation de la mémoire volatile MR1 ou à la détection que le niveau d'occupation de la mémoire volatile MR1 atteint un seuil prédéfini. Cette collecte anticipée peut être réalisée une fois ou une pluralité de fois pendant le procédé de collecte de l'invention (c.-à-d. au cours de l'analyse S8). On peut ainsi supprimer de façon anticipée des objets clones OBC avec leur objet de localisation OBL associé dans la mémoire volatile MR1 pendant l'analyse S8 car la mémoire volatile est saturée avant même la fin de cette analyse. Les objets clones OBC et objets de localisation OBL qui ont déjà été analysés et qui ne sont pas associés à l'application APP1 sont supprimés en priorité de la mémoire volatile MR1, jusqu'à libérer l'espace mémoire nécessaire, car il y a une probabilité plus faible que l'on ait encore besoin de ces objets ultérieurement. Ces objets ont déjà été scannés en S8 et ils ne sont donc *a priori* plus utiles dans l'étape d'analyse S8 pour identifier des références RF dans l'arborescence d'objets 30. En outre, ces objets ne sont *a priori* pas susceptibles d'être invoqués dans l'exécution de l'application APP1.

Cela permet de favoriser un effet de cache pour les objets conservés dans la mémoire volatile MR1. A l'issue de la collecte S22, on conserve dans la mémoire volatile MR1 un maximum d'objets OB qui sont pertinents, ce qui permet d'éviter d'y accéder à nouveau depuis la mémoire non volatile MR2 (ce qui consomme du temps et de l'énergie).

Si l'espace mémoire ainsi libéré de façon anticipé ne suffit pas, le premier dispositif DV1 peut en outre être configuré pour collecter de façon anticipée, au cours de l'analyse S8 (**figure 4**), en priorité dans la mémoire volatile MR1 au moins un objet OB qui n'a pas encore été analysé au cours de l'analyse (état ET3, blanc selon le modèle Dijkstra), qui n'est pas associé à une application en cours (APP1 par exemple), et qui est un objet clone OBC ou un objet de localisation OBL.

Cela permet de favoriser encore davantage l'effet de cash pour garder à la fin de la collecte un maximum d'objets OB qui sont pertinents dans la mémoire volatile MR1.

## Revendications

1. Procédé de collecte, mis en oeuvre par un premier dispositif électronique (DV1) comportant une première mémoire (MR1) de type volatile, ledit premier dispositif électronique coopérant avec un deuxième dispositif électronique (DV2) comportant une deuxième mémoire (MR2) de type non volatile,
les première et deuxième mémoires, comprenant des objets (OB) constituant chacun une instance d'une classe d'un langage orienté objet, chaque objet étant susceptible de comprendre au moins une référence (RF) pointant vers un autre objet,
le procédé comprenant :
- détection (S4) d'au moins un objet dans la première mémoire et d'au moins un objet dans la deuxième mémoire constituant des racines de persistance ;
- analyse (S8) d'au moins une partie des objets compris dans les première et deuxième mémoires en parcourant, depuis les racines de persistance (RC), une arborescence d'objets (30) déterminée dynamiquement à partir de chaque référence, comprise dans les objets analysés, qui pointe vers un autre objet ; dans lequel ladite analyse comprend, de manière itérative pour chaque objet analysé dans l'arborescence d'objets :
∘ si l'objet analysé est dans la deuxième mémoire et n'a pas de copie dans la première mémoire, allocation (S12) dans la première mémoire d'un objet, dit objet clone (OBC), représentant une copie dudit objet analysé ainsi que d'un objet, dit objet de localisation (OBL), comprenant une première référence pointant vers l'objet clone dans la première mémoire et une deuxième référence pointant vers l'objet analysé dans la deuxième mémoire ;
∘ identification (S14) de chaque référence (RF), comprise dans ledit objet analysé, pointant dans l'arborescence d'objets vers un autre objet, dit objet référencé ; et
∘ définition (S16), pour chaque référence identifiée, d'un type (TP) de ladite référence parmi un premier type, dit référence forte, et un deuxième type, dit référence faible, conformément à des critères prédéfinis ; ladite analyse se poursuivant le long de l'arborescence d'objets uniquement pour chaque objet référencé vers lequel pointe une référence forte depuis l'objet analysé ; et
- sur détection que ladite analyse est achevée, collecte (S22) dans les première et deuxième mémoires pour supprimer chaque objet qui n'a pas été analysé lors de ladite analyse.

2. Procédé selon la revendication 1, dans lequel, lors de ladite analyse, chaque référence d'un objet analysé est définie en tant que référence faible si au moins l'une des conditions suivantes est satisfaite :
a) ladite référence (RF) pointe vers un quelconque objet qui a été alloué dans la première mémoire au cours de ladite analyse ; et
b) ladite référence (RF) est une référence d'un objet de localisation compris dans la première mémoire, ladite référence pointant vers un objet associé compris dans la deuxième mémoire.

3. Procédé selon la revendication 1 ou 2, dans lequel, lors de ladite analyse (S8), chaque référence d'un objet analysé est définie en tant que référence forte si ladite référence pointe vers un objet qui a été alloué dans la première mémoire antérieurement à ladite analyse et si ladite référence ne pointe pas depuis la première vers la deuxième mémoire.

4. Procédé selon l'une quelconque des revendications 1 à 3, dans lequel ledit procédé est déclenché sur détection d'un évènement prédéfini comprenant au moins l'un parmi :
- réception d'une commande émise par un système d'exploitation du premier dispositif électronique ou par une application exécutée par ledit premier dispositif électronique ; et
- détection que la première mémoire ou la deuxième mémoire est saturée ou à atteint un seuil d'occupation prédéfini.

5. Procédé selon l'une quelconque des revendications 1 à 4, comprenant en outre :
- allocation, dans la première mémoire, d'un objet de marquage (OBQ) comprenant des informations de marquage associées à chaque objet déjà présent dans les première et deuxième mémoires à l'initiation de ladite analyse ; et
- mise à jour au cours de ladite analyse (S8) de sorte que lesdites informations de marquage indiquent pour chaque objet associé si ledit objet i) a déjà été analysé lors de ladite analyse, ii) n'a pas encore été analysé mais pour lequel une référence pointant vers ledit objet a déjà été identifiée, ou iii) n'a pas encore été analysé et pour lequel aucune référence pointant vers ledit objet n'a encore été identifiée ;
ladite collecte (S22) étant réalisée en sélectionnant les objets à supprimer en fonction desdites informations de marquage.

6. Procédé selon la revendication 5, dans lequel ledit objet de marquage (OBQ) est collecté dans la première mémoire lors de ladite collecte.

7. Procédé selon la revendication 5 ou 6, dans lequel l'objet de marquage (OBQ) est enregistré dans un conteneur mémoire avec chaque autre objet, de l'arborescence d'objets, contenu dans la première mémoire.

8. Procédé selon l'une quelconque des revendications 5 à 7, chaque objet (OB), de l'arborescence d'objets (30), compris dans la première mémoire volatile (MR1) est l'un parmi :
- un objet transitoire (OBT), instancié par une quelconque application ;
- un objet clone (OBC) représentant une copie d'un objet présent dans la deuxième mémoire ;
- un objet de localisation (OBL) alloué dans la première mémoire en association avec un objet clone de la première mémoire et un objet correspondant dans la deuxième mémoire ; et
- ledit objet de marquage (OBQ).

9. Procédé selon l'une quelconque des revendications 1 à 8, lequel lors de ladite collecte (S22), le premier dispositif électronique supprime par ordre de priorité décroissante :
- au moins un premier objet dans la première mémoire qui n'a pas été analysé lors de ladite analyse et pour lequel aucune référence n'a été identifiée comme pointant vers ledit au moins un premier objet ; puis
- au moins un deuxième objet dans la deuxième mémoire qui n'a pas été analysé lors de ladite analyse et pour lequel aucune référence n'a été identifiée comme pointant vers ledit au moins un deuxième objet.

10. Procédé selon l'une quelconque des revendications 1 à 9, dans lequel le premier dispositif électronique (DV1) détecte (S20) que l'analyse est achevée lorsqu'il a analysé tous les objets de l'arborescence d'objets vers lesquels pointe au moins une référence forte.

11. Procédé selon l'une quelconque des revendications 1 à 10, dans lequel ladite collecte (S22) comprend :
- suppression dans la première mémoire de chaque objet clone représentant la copie d'un quelconque objet supprimé dans la deuxième mémoire lors de ladite collecte.

12. Procédé selon l'une quelconque des revendications 1 à 11, dans lequel ladite collecte (S22) comprend :
- suppression dans la première mémoire de chaque objet de localisation qui est associé à un quelconque objet clone supprimé dans la première mémoire lors de ladite collecte.

13. Procédé selon l'une quelconque des revendications 1 à 12, dans lequel le procédé comprend en outre, sur détection d'un évènement prédéfini avant achèvement de ladite analyse, une collecte anticipée au cours de laquelle le premier dispositif électronique supprime en priorité au moins un objet, dit objet collecté, qui satisfait les conditions suivantes :
- l'objet collecté a déjà été analysé au cours de ladite analyse ;
- l'objet collecté n'est pas associé à une application en cours d'exécution ; et
- l'objet collecté est un objet clone ou de localisation.

14. Programme d'ordinateur (PG1) comportant des instructions pour l'exécution des étapes d'un procédé selon l'une quelconque des revendications 1 à 13 lorsque ledit programme est exécuté par un ordinateur.

15. Dispositif électronique (DV1), dit premier dispositif électronique, comportant une première mémoire (MR1) de type volatile, ledit premier dispositif électronique étant configuré pour coopérer avec un deuxième dispositif électronique (DV2) comportant une deuxième mémoire (MR2) de type non volatile,
les première et deuxième mémoires comprenant des objets (OB) constituant chacun une instance d'une classe d'un langage orienté objet, chaque objet étant susceptible de comprendre au moins une référence (RF) pointant vers un autre objet,
le premier dispositif électronique comprenant :
- un module de détection (MD2) pour détecter au moins un objet dans la première mémoire et au moins un objet dans la deuxième mémoire constituant des racines de persistance ;
- un module d'analyse (MD4) configuré pour réaliser une analyse d'au moins une partie des objets compris dans les première et deuxième mémoires en parcourant, depuis les racines de persistance (RC), une arborescence d'objets (30) déterminée dynamiquement à partir de chaque référence, comprise dans les objets analysés, qui pointe vers un autre objet ; dans lequel ladite analyse comprend, de manière itérative pour chaque objet analysé dans l'arborescence d'objets :
∘ si l'objet analysé est dans la deuxième mémoire et n'a pas de copie dans la première mémoire, allocation dans la première mémoire d'un objet, dit objet clone, représentant une copie dudit objet analysé ainsi que d'un objet, dit objet de localisation, comprenant une première référence pointant vers l'objet clone dans la première mémoire et une deuxième référence pointant vers l'objet analysé dans la deuxième mémoire ;
∘ identification de chaque référence, comprise dans ledit objet analysé, pointant dans l'arborescence d'objets vers un autre objet, dit objet référencé ; et
∘ définition, pour chaque référence identifiée, d'un type de ladite référence parmi un premier type, dit référence forte, et un deuxième type, dit référence faible, conformément à des critères prédéfinis ;
ladite analyse se poursuivant le long de l'arborescence d'objets uniquement pour chaque objet référencé vers lequel pointe une référence forte depuis l'objet analysé ; et
- un module de collecte (MD6) configuré, sur détection que ladite analyse est achevée, pour supprimer dans les première et deuxième mémoires chaque objet qui n'a pas été analysé par le module d'analyse lors de ladite analyse.

## Patentansprüche

1. Sammelverfahren, das von einer ersten elektronischen Vorrichtung (DV1) umgesetzt wird, die einen ersten Speicher (MR1) vom flüchtigen Typ aufweist, wobei die erste elektronische Vorrichtung mit einer zweiten elektronischen Vorrichtung (DV2) zusammenwirkt, die einen zweiten Speicher (MR2) vom nichtflüchtigen Typ aufweist,
wobei die ersten und zweiten Speicher Objekte (OB) umfassen, die jeweils eine Instanz einer Klasse einer objektorientierten Sprache darstellen, wobei jedes Objekt geeignet ist, mindestens eine Referenz (RF) zu umfassen, die auf ein anderes Objekt zeigt,
wobei das Verfahren umfasst:
- Detektion (S4) mindestens eines Objekts in dem ersten Speicher und mindestens eines Objekts in dem zweiten Speicher, die Persistenzwurzeln darstellen;
- Analyse (S8) mindestens eines Teils der Objekte, die in den ersten und zweiten Speichern enthalten sind, indem, von den Persistenzwurzeln (RC) aus, ein Objektbaum (30) durchlaufen wird, der ausgehend von jeder Referenz dynamisch bestimmt wird, die in den analysierten Objekten enthalten ist und die auf ein anderes Objekt zeigt; wobei die Analyse iterativ für jedes analysierte Objekt in dem Objektbaum umfasst:
- wenn das analysierte Objekt in dem zweiten Speicher ist und keine Kopie in dem ersten Speicher hat, Zuweisen (S12), in dem ersten Speicher, eines Objekts, Klonobjekt (OBC) genannt, das eine Kopie des analysierten Objekts repräsentiert, sowie eines Objekts, Lokalisierungsobjekt (OBL) genannt, das eine erste Referenz umfasst, die auf das Klonobjekt in dem ersten Speicher zeigt, und eine zweite Referenz, die auf das analysierte Objekt in dem zweiten Speicher zeigt;
- Identifikation (S14) jeder Referenz (RF), die in dem analysieren Objekt enthalten ist und die in dem Objektbaum auf ein anderes Objekt, referenziertes Objekt genannt, zeigt; und
- Definition (S16), für jede identifizierte Referenz, eines Typs (TP) der Referenz unter einem ersten Typ, starke Referenz genannt, und einem zweiten Typ, schwache Referenz genannt, gemäß vorgegebenen Kriterien; wobei die Analyse entlang des Objektbaums nur für jedes referenzierte Objekt fortgesetzt wird, auf das eine starke Referenz von dem analysierten Objekt aus zeigt; und
- bei Detektion, dass die Analyse abgeschlossen ist, Sammeln (S22) in den ersten und zweiten Speichern, um jedes Objekt zu löschen, das bei der Analyse nicht analysiert worden ist.

2. Verfahren nach Anspruch 1, bei dem, bei der Analyse, jede Referenz eines analysierten Objekts als schwache Referenz definiert wird, wenn mindestens eine der folgenden Bedingungen erfüllt ist:
a) die Referenz (RF) zeigt auf ein beliebiges Objekt, das in dem ersten Speicher im Laufe der Analyse zugewiesen worden ist; und
b) die Referenz (RF) ist eine Referenz eines Lokalisierungsobjekts, das in dem ersten Speicher enthalten ist, wobei die Referenz auf ein zugeordnetes Objekt zeigt, das in dem zweiten Speicher enthalten ist.

3. Verfahren nach Anspruch 1 oder 2, bei dem, bei der Analyse (S8), jede Referenz eines analysierten Objekts als starke Referenz definiert wird, wenn die Referenz auf ein Objekt zeigt, das in dem ersten Speicher vor der Analyse zugewiesen worden ist, und wenn die Referenz nicht von dem ersten aus auf den zweiten Speicher zeigt.

4. Verfahren nach einem der Ansprüche 1 bis 3, bei dem das Verfahren bei Detektion eines vorgegebenen Ereignisses ausgelöst wird, das mindestens eines umfasst unter:
- Empfangen eines Befehls, der von einem Betriebssystem der ersten elektronischen Vorrichtung oder von einer von der ersten elektronischen Vorrichtung ausgeführten Anwendung gesendet wird; und
- Detektion, dass der erste Speicher oder der zweite Speicher voll ist oder einen vorgegebenen Belegungsschwellenwert erreicht hat.

5. Verfahren nach einem der Ansprüche 1 bis 4, umfassend ferner:
- Zuweisen, in dem ersten Speicher, eines Markierungsobjekts (OBQ), das Markierungsinformationen umfasst, die jedem Objekt zugeordnet sind, das in den ersten und zweiten Speichern bei der Initiierung der Analyse bereits vorhanden ist; und
- Aktualisieren im Laufe der Analyse (S8), so dass die Markierungsinformationen für jedes zugeordnete Objekt angeben, dass das Objekt i) bei der Analyse bereits analysiert worden ist, ii) noch nicht analysiert worden ist, aber für dieses bereits eine auf das Objekt zeigende Referenz identifiziert worden ist, oder iii) noch nicht analysiert worden ist und für dieses noch keine auf das Objekt zeigende Referenz identifiziert worden ist;
wobei das Sammeln (S22) ausgeführt wird, indem die zu löschenden Objekte in Abhängigkeit von den Markierungsinformationen ausgewählt werden.

6. Verfahren nach Anspruch 5, bei dem das Markierungsobjekt (OBQ) bei dem Sammeln in dem ersten Speicher gesammelt wird.

7. Verfahren nach Anspruch 5 oder 6, bei dem das Markierungsobjekt (OBQ) in einem Speicherbehälter mit jedem anderen Objekt, des Objektbaums, registriert wird, das in dem ersten Speicher enthalten ist.

8. Verfahren nach einem der Ansprüche 5 bis 7, jedes Objekt (OB), des Objektbaums (30), das in dem ersten flüchtigen Speicher (MR1) enthalten ist, eines ist unter:
- einem transienten Objekt (OBT), das von einer beliebigen Anwendung instanziiert wird;
- einem Klonobjekt (OBC), das eine Kopie eines in dem zweiten Speicher vorhandenen Objekts repräsentiert;
- einem Lokalisierungsobjekt(OBL), das in dem ersten Speicher in Verbindung mit einem Klonobjekt des ersten Speichers und einem entsprechenden Objekt in dem zweiten Speicher zugewiesen ist; und
- dem Markierungsobjekt (OBQ).

9. Verfahren nach einem der Ansprüche 1 bis 8, bei dem, bei dem Sammeln (S22), die erste elektronische Vorrichtung in der Reihenfolge mit abnehmender Priorität löscht:
- mindestens ein erstes Objekt in dem ersten Speicher, das bei der Analyse nicht analysiert worden ist und für das keine Referenz als auf das mindestens eine erste Objekt zeigend identifiziert worden ist; dann
- mindestens ein zweites Objekt in dem zweiten Speicher, das bei der Analyse nicht analysiert worden ist und für das keine Referenz als auf das mindestens eine zweite Objekt zeigend identifiziert worden ist.

10. Verfahren nach einem der Ansprüche 1 bis 9, bei dem die erste elektronische Vorrichtung (DV1) detektiert (S20), dass die Analyse abgeschlossen ist, wenn sie alle Objekte des Objektbaums analysiert hat, auf die mindestens eine starke Referenz zeigt.

11. Verfahren nach einem der Ansprüche 1 bis 10, bei dem das Sammeln (S22) umfasst:
- Löschen in dem ersten Speicher jedes Klonobjekts, das die Kopie eines beliebigen Objekts repräsentiert, das in dem zweiten Speicher bei dem Sammeln gelöscht wird.

12. Verfahren nach einem der Ansprüche 1 bis 11, bei dem das Sammeln (S22) umfasst:
- Löschen in dem ersten Speicher jedes Lokalisierungsobjekts, das einem beliebigen Klonobjekt zugeordnet ist, das in dem ersten Speicher bei dem Sammeln gelöscht wird.

13. Verfahren nach einem der Ansprüche 1 bis 12, bei dem das Verfahren ferner, bei Detektion eines vorgegebenen Ereignisses vor dem Abschluss der Analyse, ein vorzeitiges Sammeln umfasst, in dessen Verlauf die erste elektronische Vorrichtung vorrangig mindestens ein Objekt, gesammeltes Objekt genannt, löscht, das die folgenden Bedingungen erfüllt:
- das gesammelte Objekt ist im Laufe der Analyse bereits analysiert worden;
- das gesammelte Objekt ist keiner in Ausführung befindlichen Anwendung zugeordnet; und
- das gesammelte Objekt ist ein Klon- oder Lokalisierungsobjekt.

14. Computerprogramm (PG1), das Anweisungen beinhaltet, die bei der Ausführung des Programms durch einen Computer die Schritte eines Verfahrens nach einem der Ansprüche 1 bis 13 ausführen.

15. Elektronische Vorrichtung (DV1), erste elektronische Vorrichtung genannt, die einen ersten Speicher (MR1) vom flüchtigen Typ aufweist, wobei die erste elektronische Vorrichtung dazu konfiguriert ist, mit einer zweiten elektronischen Vorrichtung (DV2) zusammenzuwirken, die einen zweiten Speicher (MR2) vom nichtflüchtigen Typ aufweist,
wobei die ersten und zweiten Speicher Objekte (OB) umfassen, die jeweils eine Instanz einer Klasse einer objektorientierten Sprache darstellen, wobei jedes Objekt mindestens eine Referenz (RF) umfassen kann, die auf ein anderes Objekt zeigt,
wobei die erste elektronische Vorrichtung umfasst:
- ein Detektionsmodul (MD2), um mindestens ein Objekt in dem ersten Speicher und mindestens ein Objekt in dem zweiten Speicher zu detektieren, die Persistenzwurzeln darstellen;
- ein Analysemodul (MD4), das dazu konfiguriert ist, eine Analyse mindestens eines Teils der Objekte auszuführen, die in den ersten und zweiten Speichern enthalten sind, wobei es, von den Persistenzwurzeln (RC) aus, einen Objektbaum (30) durchläuft, der ausgehend von jeder Referenz dynamisch bestimmt wird, die in den analysierten Objekten enthalten ist und die auf ein anderes Objekt zeigt; wobei die Analyse iterativ für jedes analysierte Objekt in dem Objektbaum umfasst:
∘ wenn das analysierte Objekt in dem zweiten Speicher ist und keine Kopie in dem ersten Speicher hat, Zuweisen, in dem ersten Speicher, eines Objekts, Klonobjekt genannt, das eine Kopie des analysierten Objekts repräsentiert, sowie eines Objekts, Lokalisierungsobjekt genannt, das eine erste Referenz umfasst, die auf das Klonobjekt in dem ersten Speicher zeigt, und eine zweite Referenz, die auf das analysierte Objekt in dem zweiten Speicher zeigt;
∘ Identifikation jeder Referenz, die in dem analysieren Objekt enthalten ist und die in dem Objektbaum auf ein anderes Objekt, referenziertes Objekt genannt, zeigt; und
∘ Definition, für jede identifizierte Referenz, eines Typs der Referenz unter einem ersten Typ, starke Referenz genannt, und einem zweiten Typ, schwache Referenz genannt, gemäß vorgegebenen Kriterien; wobei die Analyse entlang des Objektbaums nur für jedes referenzierte Objekt fortgesetzt wird, auf das eine starke Referenz von dem analysierten Objekt aus zeigt; und
- ein Sammelmodul (MD6), das dazu konfiguriert ist, bei der Detektion, dass die Analyse abgeschlossen ist, in den ersten und zweiten Speichern jedes Objekt zu löschen, das von dem Analysemodul bei der Analyse nicht analysiert worden ist.

## Claims

1. Collection method, implemented by a first electronic device (DV1) comprising a first, volatile memory (MR1), said first electronic device interacting with a second electronic device (DV2) comprising a second, non-volatile memory (MR2),
the first and second memories comprising objects (OB) each constituting an instance of a class of an object-oriented language, each object being liable to comprise at least one reference (RF) pointing to another object, the method comprising:
- detecting (S4) at least one object in the first memory and at least one object in the second memory, constituting roots of persistence;
- analysing (S8) at least some of the objects contained in the first and second memories by scanning, from the roots of persistence (RC), a tree of objects (30) which is determined dynamically on the basis of each reference, contained in the analysed objects, which points to another object;
wherein said analysis comprises, iteratively for each analysed object in the tree of objects:
∘ if the analysed object is in the second memory and has no copy in the first memory, allocating (S12), in the first memory, an object, referred to as a clone object (OBC), representing a copy of said analysed object as well as an object, referred to as a location object (OBL), comprising a first reference pointing to the clone object in the first memory and a second reference pointing to the analysed object in the second memory;
∘ identifying (S14) each reference (RF), contained in said analysed object, pointing, in the tree of objects, to another object, referred to as a referenced object; and
∘ defining (S16), for each identified reference, a type (TP) of said reference from among a first type, referred to as a strong reference, and a second type, referred to as a weak reference, in accordance with predefined criteria;
said analysis continuing along the tree of objects only for each referenced object to which a strong reference points from the analysed object; and
- upon detecting that said analysis is complete, collecting (S22) in the first and second memories in order to delete each object which was not analysed during said analysis.

2. Method according to Claim 1, wherein, during said analysis, each reference of an analysed object is defined as a weak reference if at least one of the following conditions is met:
a) said reference (RF) points to any object which was allocated in the first memory during said analysis; and
b) said reference (RF) is a reference of a location object contained in the first memory, said reference pointing to an associated object contained in the second memory.

3. Method according to Claim 1 or 2, wherein, during said analysis (S8), each reference of an object is defined as a strong reference if said reference points to an object which was allocated in the first memory prior to said analysis and if said reference does not point from the first to the second memory.

4. Method according to any one of Claims 1 to 3, wherein said method is triggered upon detecting a predefined event comprising at least one out of:
- receiving a command sent by an operating system of the first electronic device or by an application executed by said first electronic device; and
- detecting that the first memory or the second memory is saturated or has reached a predefined occupation threshold.

5. Method according to any one of Claims 1 to 4, further comprising:
- allocating, in the first memory, a marking object (OBQ) comprising marking information associated with each object which is already present in the first and second memories at the initiation of said analysis; and
- updating, during said analysis (S8), so that said marking information indicates, for each associated object, whether said object i) has already been analysed during said analysis, ii) has not yet been analysed but for which a reference pointing to said object has already been identified, or iii) has not yet been analysed and for which no reference pointing to said object has yet been identified;
said collection (S22) being carried out by selecting the objects to be deleted depending on said marking information.

6. Method according to Claim 5, wherein said marking object (OBQ) is collected in the first memory during said collection.

7. Method according to Claim 5 or 6, wherein the marking object (OBQ) is stored in a memory container with each other object, of the tree of objects, contained in the first memory.

8. Method according to any one of Claims 5 to 7, each object (OB), of the tree of objects (30), contained in the first, volatile memory (MR1) being one out of:
- a transient object (OBT), instantiated by any application;
- a clone object (OBC) representing a copy of an object which is present in the second memory;
- a location object (OBL) allocated in the first memory in combination with a clone object from the first memory and a corresponding object in the second memory; and
- said marking object (OBQ).

9. Method according to any one of Claims 1 to 8, wherein, during said collection (S22), the first electronic device deletes, in order of decreasing priority:
- at least one first object in the first memory which was not analysed during said analysis and for which no reference was identified as pointing to said at least one first object; then
- at least one second object in the second memory which was not analysed during said analysis and for which no reference was identified as pointing to said at least one second object.

10. Method according to any one of Claims 1 to 9, wherein the first electronic device (DV1) detects (S20) that the analysis is complete when it has analysed all the objects of the tree of objects to which at least one strong reference points.

11. Method according to any one of Claims 1 to 10, wherein said collection (S22) comprises:
- deleting, in the first memory, each clone object representing the copy of any object deleted in the second memory during said collection.

12. Method according to any one of Claims 1 to 11, wherein said collection (S22) comprises:
- deleting, in the first memory, each location object which is associated with any clone object deleted in the first memory during said collection.

13. Method according to any one of Claims 1 to 12, wherein the method further comprises, upon detecting a predefined event before said analysis is complete, an advance collection during which the first electronic device deletes, as a matter of priority, at least one object, referred to as a collected object, which meets the following conditions:
- the collected object has already been analysed during said analysis;
- the collected object is not associated with an application which is being executed; and
- the collected object is a clone or location object.

14. Computer program (PG1) comprising instructions for executing the steps of a method according to any one of Claims 1 to 13 when said program is executed by a computer.

15. Electronic device (DV1), referred to as a first electronic device, comprising a first, volatile memory (MR1), said first electronic device being configured to interact with a second electronic device (DV2) comprising a second, non-volatile memory (MR2),
the first and second memories comprising objects (OB) each constituting an instance of a class of an object-oriented language, each object being liable to comprise at least one reference (RF) pointing to another object, the first electronic device comprising:
- a detection module (MD2) for detecting at least one object in the first memory and at least one object in the second memory constituting roots of persistence;
- an analysis module (MD4) configured to carry out an analysis of at least some of the objects contained in the first and second memories by scanning, from the roots of persistence (RC), a tree of objects (30) which is determined dynamically on the basis of each reference, contained in the analysed objects, which points to another object;
wherein said analysis comprises, iteratively for each analysed object in the tree of objects:
∘ if the analysed object is in the second memory and has no copy in the first memory, allocating, in the first memory, an object, referred to as a clone object, representing a copy of said analysed object as well as an object, referred to as a location object, comprising a first reference pointing to the clone object in the first memory and a second reference pointing to the analysed object in the second memory;
∘ identifying each reference, contained in said analysed object, pointing, in the tree of objects, to another object, referred to as a referenced object; and
∘ defining, for each identified reference, a type of said reference from among a first type, referred to as a strong reference, and a second type, referred to as a weak reference, in accordance with predefined criteria;
said analysis continuing along the tree of objects only for each referenced object to which a strong reference points from the analysed object; and
- a collection module (MD6) configured, upon detecting that said analysis is complete, to delete, in the first and second memories, each object which was not analysed by the analysis module during said analysis.
